# EUROPÄISCHE PATENTANMELDUNG

(11) **EP 3 045 881 A1**
(43) Veröffentlichungstag der Anmeldung: **20.07.2016**
(21) Anmeldenummer: 15195828.7
(22) Anmeldetag: 23.11.2015
(51) Int. Cl.: G01F 25/00, G01F 23/284

(54) **VORRICHTUNG ZUR BESTIMMUNG DES FÜLLSTANDS EINES MEDIUMS IN EINEM BEHÄLTER**

(30) Priorität: 13.01.2015 DE 102015100417
(71) Anmelder: Krohne Messtechnik GmbH, 47058 Duisburg (DE)
(72) Erfinder: Baer, Christoph, 45525 Hattingen (DE); Musch, Thomas, 44879 Bochum (DE); Deilmann, Michael, 45257 Essen (DE); Bilgic, Attila, 40880 Ratingen (DE); Neuburger, Stephan, 55271 Stadecken-Elsheim (DE)
(74) Vertreter: Gesthuysen Patent- und Rechtsanwälte

(57) **Zusammenfassung**

Beschrieben und dargestellt ist ein Verfahren zur Bestimmung des Füllstands eines Mediums (2) in einem Behälter (3).

Der Erfindung liegt die Aufgabe zugrunde, ein Verfahren zur Bestimmung des Füllstands vorzuschlagen, das vorteilhaft gegenüber dem Stand der Technik ist.

Die Aufgabe wird dadurch gelöst, dass mehrere Abstrahlvorrichtungen (6) mit elektromagnetischen Signalen beaufschlagt werden und dass ein Abstrahlverhalten der Abstrahlvorrichtungen (6) in Hinblick auf den Füllstand des Mediums (2) ausgewertet wird.

## Beschreibung

Die Erfindung betrifft ein Verfahren zur Bestimmung des Füllstands eines Mediums in einem Behälter.

Bei dem Medium handelt es sich beispielsweise um ein Schüttgut oder um eine Flüssigkeit und bei dem Behälter beispielsweise um einen Tank, ein Silo oder um ein Gerinne.

In der industriellen Prozessautomatisierung ist es bekannt, den Füllstand von Medien entweder kontinuierlich zu messen oder besondere Grenzstände gezielt zu überwachen.

Solche Vorrichtungen zur Überwachung von Grenzständen werden auch als Füllstands- oder Grenzstandschalter bezeichnet. Sie dienen beispielsweise je nach Einbauposition dem Überlauf- oder dem Leerlauf- bzw. Pumpenschutz.

Erreicht das Medium einen vorbestimmten Füllstand oder unterschreitet es einen solchen, so wird von den Schaltern in der Regel ein Signal erzeugt, das z. B. einen Befüllvorgang unterbricht oder einen Sicherheitsmechanismus auslöst oder das Schließen eines Abflussventils bewirkt.

Bekannt ist es beispielsweise, Grenzstände kapazitiv (z. B. DE 100 23 850 A1), durch eine Leitfähigkeitsmessung (z. B. WO 97/37198 A1) oder durch die Verwendung von mechanisch schwingfähigen Sensoren (z. B. DE 198 25 501 A1) zu detektieren.

Um Grenzstände eines Mediums zu detektieren, lässt sich weiterhin der WO 2013/167384 A1 eine Vorrichtung entnehmen, bei der die Frequenz eines Ausgangssignals eines Resonators ausgewertet wird. Der Resonator steht in Kontakt mit dem Innenraum des Behälters, der das Medium beinhaltet bzw. führt. Die Detektion erfolgt dabei, indem ausgenutzt wird, dass die Frequenz des Resonators abhängig ist von der Dielektrizitätszahl des Mediums. In einer Ausgestaltung ist der Resonator als Mikrostreifenleitung oder als Abstrahlvorrichtung ausgestaltet.

Aus einem gänzlich anderen Anwendungsgebiet ist es bekannt, die Feuchtigkeit von Gegenständen in einem Behälter unter Verwendung von Reflektorschaltungen zu ermitteln, siehe DE 10 2004 016 725 A1.

Eine Streifenleiterantenne für die Füllstandserkennung ist beispielsweise in der DE 199 35 743 A1 vorgesehen. Dabei werden in einer Ausgestaltung für die redundante Überwachung des Füllstands zwei Empfänger von Mikrowellensignalen verwendet.

Eine beispielhafte Ausgestaltung von Abstrahlvorrichtungen, die im Bereich der Füllstandsmessung verwendet werden, offenbart die DE 10 2006 019 688 B4. Solche Abstrahlvorrichtungen bestehen im Allgemeinen aus Metallflächen, die auf oder in Leiterplatten oder anderen Substraten vorliegen.

Im Stand der Technik ist es zusätzlich bekannt, als Reflektoren dienende Metallflächen ergänzend hinzuzufügen.

Im Stand der Technik sind auch sogenannte Patchantennen bekannt (andere Bezeichnungen sind "flat antenna" oder "micro strip antenna"). Ein Array wird durch das Zusammenschalten mehrerer Antennen erzeugt.

Dabei ist es bekannt, unterschiedliche Resonanzstrukturen: Halb- oder Viertelwelle zu erzeugen, siehe z. B. die DE 699 36 903 T2.

Panelantennen lassen sich beispielsweise verwenden, um die Oberflächenstruktur von Medien zu vermessen, siehe z. B. die EP 1 701 142 A2.

Panelantennen, die in Keramikstrukturen angeordnet sind, werden beispielsweise gemäß der WO 2009/121530 A1 ebenfalls zur Füllstandserkennung verwendet.

Bei dem Füllstandsschalter gemäß der EP 1 956 349 A2 werden jeweils in eine Mess- und in eine Resonanzleiteranordnung elektromagnetische Signale eingekoppelt, wobei das Signal der Messleiteranordnung mit dem Medium, dessen Füllstand es zu überwachen gilt, wechselwirken kann.

Für die besondere Anwendung der Überwachung des Füllstands eines Blutreservoirs wird in der DE 195 16 789 B4 eine Vorrichtung beschrieben, die Mikrowellensensoren aufweist. Diese Sensoren werden außerhalb des Reservoirs angebracht und strahlen durch dessen Wand hindurch. In einer Ausgestaltung wird beschrieben, dass mehrere Sensoren auf gleicher Höhe angebracht werden. Weiterhin ist vorgesehen, dass Sensoren auf unterschiedlichen Höhen angebracht sind, um bereits die Annäherung des Füllstands an einen kritischen Grenzstand signalisieren zu können.

Problematisch bei den vorgenannten Vorrichtungen bzw. Grenzstandschaltern sind Verschmutzungen oder Anhaftungen des Mediums an der Behälterwand oder speziell an den Sensoren. Dies kann zu Fehlsignalen führen oder sogar die Detektion des Erreichens oder Unterschreitens eines Füllstands verhindern.

Ausgehend von dieser Problematik ist es beispielsweise bei Membranschwingern bekannt, während einer Reinigungsphase Gasblasen abzuschütteln (siehe DE 10 2008 050 445 A1).

Bei sicherheitskritischen Anwendungen ist es weiterhin bekannt, die Sensoren oder Vorrichtungen redundant auszuführen. Im einfachsten Fall werden zwei Messvorrichtungen verwendet, die der gleichen Funktion dienen.

Dabei werden insbesondere folgende Arten der Redundanz unterschieden:
Bei der heißen Redundanz (oder auch als Hot-Spare bezeichnet) werden mehrere Sensoren gleichzeitig aktiv betrieben. Ein sogenannter Voter bewertet die Einzelergebnisse, wobei ggf. die Mehrheit entscheidet.
Bei der kalten Redundanz sind mehrere Sensoren vorhanden, jedoch ist nur ein Sensor aktiv. Ausgehend von der Bewertung der Signale dieses Einzelsensors werden unter Umständen weitere Sensoren aktiviert.
Bei der Standby- oder passiven Redundanz sind ebenfalls mehrere Sensoren vorhanden und ist ebenfalls nur ein Sensor aktiv. Dabei sind die nicht aktiven Sensoren im Wartezustand. Im Fehlerfall des aktiven Sensors wird auf einen anderen Sensor umgeschaltet.

Die Redundanz kann dabei homogen oder diversitär realisiert sein. Das bedeutet beispielsweise, dass entweder der gleiche Sensortyp oder die gleichen Komponenten mehrfach eingesetzt werden bzw. dass die einzelnen Sensoren oder Komponenten von unterschiedlichen Herstellern stammen oder auf unterschiedlichen Prinzipien basieren.

Der Erfindung liegt die Aufgabe zugrunde, ein Verfahren zur Bestimmung des Füllstands vorzuschlagen, das vorteilhaft gegenüber dem Stand der Technik ist.

Das erfindungsgemäße Verfahren, bei dem die zuvor hergeleitete und aufgezeigte Aufgabe gelöst ist, ist zunächst und im Wesentlichen dadurch gekennzeichnet, dass mehrere Abstrahlvorrichtungen mit elektromagnetischen Signalen beaufschlagt werden und dass ein Abstrahlverhalten mindestens eines Teils der Abstrahlvorrichtungen in Hinblick auf den Füllstand des Mediums ausgewertet wird.

Bei den elektromagnetischen Signalen handelt es sich in einer Ausgestaltung um Hochfrequenz- bzw. Mikrowellensignale.

Die Abstrahlvorrichtungen können auch als Einzelsensoren betrachtet werden, die kombiniert werden bzw. deren Messergebnisse zusammengeführt werden für die Bestimmung des Füllstands oder weiterer Messgrößen, z. B. in Bezug auf das Medium.

Die Abstrahlvorrichtungen, bei denen es sich um mindestens zwei handelt, werden für die Messungen mit den elektromagnetischen Signalen beaufschlagt.

In einer Ausgestaltung erfolgt die Beaufschlagung ständig. In einer alternativen Ausgestaltung wird eine getaktete Beaufschlagung vorgenommen. Die Beaufschlagung erfolgt in einer Ausgestaltung bedarfsgesteuert und in einer alternativen oder ergänzenden Ausgestaltung in Abhängigkeit davon, ob ein vorgebbares Energiequantum vorhanden ist.

Die Abstrahlvorrichtungen sind dabei in einer Ausgestaltung Antennen, die elektromagnetische Signale abstrahlen bzw. die elektromagnetische Signale in den Raum vor der dem Medium bzw. dem Innenraum des Behälters zugewandten Seite der Abstrahlvorrichtungen einkoppeln.

Für die Füllstandsbestimmung wird ein Abstrahlverhalten der Abstrahlvorrichtungen ausgewertet.

Das Abstrahlverhalten bezieht sich dabei in einer Ausgestaltung darauf, ob eine Resonanzbedingung für mindestens eine Abstrahlvorrichtung sich geändert hat oder gleich geblieben ist.

Für die Beurteilung des Abstrahlverhaltens werden daher beispielsweise je nach Ausgestaltung die Resonanzfrequenz, die Impedanz oder ggf. in Folge der Beaufschlagung mit den elektromagnetischen Signalen auftretende Reflexionssignale ermittelt bzw. ausgewertet.

Ändert sich das Abstrahlverhalten, was z. B. durch eine Änderung der Resonanzfrequenz erkannt wird, so wird daraus geschlossen, dass sich entweder das Medium vor der Abstrahlvorrichtung geändert hat oder dass das Medium einen Füllstand erreicht hat, der mit der Abstrahlvorrichtung verknüpft ist. Dabei stellt das Erreichen eines Füllstands quasi auch eine Änderung des die Abstrahlvorrichtung bedeckenden Mediums dar, insofern - beispielweise für den Fall der Anwendung als Überlaufschutz - die vor der Abstrahlvorrichtung befindliche Umgebungs- oder Prozessluft durch das zu überwachende Medium ersetzt wird.

Die Abstrahlvorrichtungen sind in einer Variante derartig ausgestaltet und angeordnet, dass sie - beim Erreichen eines gewissen Füllstands - in Kontakt mit dem Medium stehen.

Durch den - mittel- oder unmittelbaren - Kontakt zwischen Abstrahlvorrichtung und Medium ändert sich insbesondere das Abstrahlverhalten der Abstrahlvorrichtungen, so dass sich aus dem Erkennen des veränderten Abstrahlverhaltens darauf schließen lässt, dass der zugeordnete Füllstand erreicht worden ist.

Die Verwendung von mehreren Abstrahlvorrichtungen hat insbesondere den Vorteil, dass so mehrere Füllstände erkannt werden können und/oder dass wenigstens ein Füllstand redundant überwacht werden kann.

Daher wird in einer Ausgestaltung das Verhalten von wenigstens einigen Abstrahlvorrichtungen separat ausgewertet.

In einer Ausgestaltung werden alle vorhandenen Abstrahlvorrichtungen separat in Bezug auf ihr jeweiliges Abstrahlverhalten ausgewertet.

Die einzelnen Daten bzw. Ergebnisse für die einzelnen Abstrahlvorrichtungen werden als Teilaussagen anschließend zu einer Gesamtaussage vereinigt.

Hierfür werden die Abstrahlvorrichtungen in einer Ausgestaltung zu Gruppen zusammengefasst, die jeweils im Zusammenspiel ausgewertet bzw. überwacht werden.

Hierbei fließen in einer Ausgestaltung auch Plausibilitätsüberlegungen ein.

In einer weiteren Ausgestaltung werden die Einzelergebnisse für die Selbstüberwachung der Abstrahlvorrichtungen verwendet.

In einer Ausgestaltung sind die Abstrahlvorrichtungen zumindest teilweise auf unterschiedlichen Höhen entlang einer Längsachse des Behälters angeordnet.

Diese Anordnung wird in einer Ausgestaltung durch gezielte Positionierung der Abstrahlvorrichtungen auf vorgegebenen Höhen bzw. mit vorgegebenen Höhendifferenzen erzeugt.

In einer weiteren Ausgestaltung ergeben sich die unterschiedlichen Anordnungen zufällig durch die Montage, indem z. B. ein Trägerelement mit den Abstrahlvorrichtungen im Behälter montiert wird.

Die Montage geschieht in einer Ausgestaltung zumindest teilweise durch einen Schritt, in dem ein Trägerelement in eine Wandung des Behälters eingedreht wird.

Durch das Ziel, Füllstände zu detektieren, sind die Abstrahlvorrichtungen vorzugsweise derartig ausgestaltet und relativ zu dem Behälter angeordnet, der das Medium beherbergt, dass sie an der Seite des Behälters mit dem Medium wechselwirken können.

In einer Ausgestaltung wird zumindest ein Teil der Abstrahlvorrichtungen mit einem mono-frequenten Signal beaufschlagt.

In einer Ausgestaltung werden die Abstrahlvorrichtungen zeitgleich oder zeitversetzt mit dem gleichen Signal beaufschlagt.

Die Frequenz des Signals ist dabei in einer Ausgestaltung gleich der Resonanzfrequenz, wenn sich kein Medium bzw. insbesondere nur Umgebungsluft vor den Abstrahlvorrichtungen, die mit den elektromagnetischen Signalen zur Ermittlung des Abstrahlungsverhaltens beaufschlagt werden, befindet. Ändert sich daher die Resonanzfrequenz, so bedeutet dies, dass sich Medium vor der entsprechenden Abstrahlvorrichtung befindet. In diesem Fall wird das Erreichen eines Füllstands erkannt, so dass es sich insbesondere um die Realisierung eines Überfüllschutzes handelt.

In einer alternativen Ausgestaltung entspricht die Frequenz der elektromagnetischen Signale der Resonanzfrequenz beim Vorliegen einer Bedeckung durch das Medium. Ergibt sich daher infolge einer Beaufschlagung der Abstrahlvorrichtungen mit solchen Signalen, dass die Frequenz nicht mehr passend ist, so kann daraus geschlossen werden, dass das Medium den zugeordneten Füllstand unterschritten hat. Dies unter der Voraussetzung, dass sich das Medium in Bezug auf seine für die Messung relevanten Eigenschaften selbst nicht verändert.

In einer Ausgestaltung werden Signale mit unterschiedlichen Frequenzen - insbesondere mit unterschiedlichen Resonanzfrequenzen - verwendet, um bei einer Messung, also bei einer Beaufschlagung der Abstrahlvorrichtungen mit den elektromagnetischen Signalen das Abstrahlverhalten der betroffenen Abstrahlvorrichtungen zu ermitteln bzw. zu überwachen.

Ein Teil der Abstrahlvorrichtungen erkennt also beispielweise den Übergang von einem freien zu einem bedeckten Zustand, während ein anderer Teil der Abstrahlvorrichtungen gleichzeitig den Übergang vom bedeckten zum vom Medium freien Zustand überwacht.

In einer Ausgestaltung wird ein Teil der Abstrahlvorrichtungen mit elektromagnetischen Signalen beaufschlagt und von einem weiteren Teil der Abstrahlvorrichtungen werden Signale abgegriffen. Die abgegriffenen Signale ergeben sich dabei in einer Ausgestaltung durch eine direkte Kopplung zwischen den Abstrahlvorrichtungen und ergeben sich in einer alternativen oder ergänzenden Ausgestaltung durch eine Kopplung über das Medium.

In den vorangehenden Ausgestaltungen wurden jeweils Signale mit einer speziellen Frequenz verwendet, die es erlauben zu erkennen, ob eine Änderung aufgetreten ist oder nicht, d. h. ob die Signale und die Frequenz noch passen oder nicht.

In der folgenden Ausgestaltung wird diese Ja/Nein-Aussage erweitert auf ein umfassenderes Vermessen des Abstrahlverhaltens von mindestens einer Abstrahlvorrichtung. Dies erlaubt es, mehr Information über das Medium oder über die Abstrahlvorrichtungen zu erhalten.

Daher ist in einer Ausgestaltung vorgesehen, dass zumindest ein Teil der Abstrahlvorrichtungen mit mehreren elektromagnetischen Signalen mit Frequenzen innerhalb eines vorgebbaren Frequenzbands beaufschlagt wird.

Die Bezeichnung Teil der Abstrahlvorrichtungen bezieht sich je nach Ausgestaltung auf mindestens eine Abstrahlvorrichtung und maximal auf alle vorhandenen Abstrahlvorrichtungen.

In einer Ausgestaltung wird insbesondere ein Frequenzsweep durchgeführt, um das Resonanzverhalten von mindestens einer Abstrahlvorrichtung auszumessen und vorzugsweise auch die aktuell der Abstrahlvorrichtung zugeordnete Resonanzfrequenz zu ermitteln.

Ausgehend von der ermittelten Resonanzfrequenz wird in einer Ausgestaltung auf die Permittivität des die Abstrahlvorrichtung bedeckenden Mediums geschlossen.

Diese Auswertung geht darauf zurück, dass das Abstrahlverhalten der Abstrahlvorrichtungen auch davon abhängig ist, welche Materialeigenschaften die umgebenden Substanzen haben.

Wird die Abstrahlvorrichtung insbesondere als Antenne verstanden, so hängt deren Abstrahlverhalten von den Materialeigenschaften des Mediums ab, in das die elektromagnetischen Signale eingestrahlt werden. Ist daher ein Zusammenhang zwischen dem Abstrahlverhalten und der relevanten Materialeigenschaft - hier die Permittivität - bekannt, so kann aus einem für das Abstrahlverhalten ermittelten Maß auf die Materialeigenschaft geschlossen werden.

In einer Ausgestaltung wird bei der Auswertung des Abstrahlverhaltens - von mindestens einer Abstrahlvorrichtung - mindestens ein Maß für die Impedanzanpassung ermittelt.

In einer Ausgestaltung wird bei der Auswertung des Abstrahlverhaltens für mehrere Abstrahlvorrichtungen jeweils mindestens ein Maß für die Impedanzanpassung ermittelt.

Die Abstrahlvorrichtungen werden hierfür insbesondere derartig verstanden, dass sie jeweils eine Wellenimpedanz einer Leitung, die die elektromagnetischen Signale trägt, anpassen an die Wellenimpedanz, die im Bereich vor der jeweiligen Abstrahlvorrichtung gegeben ist und die daher auch davon abhängt, ob ein Medium bzw. welches Medium vorhanden ist. Daher wird für die Füllstandsüberwachung ein Maß für die Impedanzanpassung ermittelt.

In einer Ausgestaltung wird ein zeitliches Verhalten des Maßes für die Impedanzanpassung ermittelt und ausgewertet.

In der vorgenannten Ausgestaltung wird also die zeitliche Entwicklung des Abstrahlverhaltens von mindestens einer Abstrahlvorrichtung ausgenutzt. Hierdurch lassen sich beispielsweise Änderungen des Mediums oder Änderungen der Abstrahlvorrichtung erkennen.

Sind mehrere Abstrahlvorrichtungen vorhanden, befinden sich diese auf unterschiedlichen Höhen in Bezug auf den Füllstand und wird das Verhalten der Abstrahlvorrichtungen separat ausgewertet, so ist es möglich, nicht nur das Erreichen eines Füllstands, sondern sogar auch die Annäherung des Mediums an diesen Füllstand zu erkennen.

Eine solche Information kann dabei separat ausgegeben werden oder kann auch für eine Plausibilitätsüberprüfung rein intern als Teil der Auswertung verwendet werden.

In den folgenden Ausgestaltungen wird eine Annäherungsfunktion realisiert, die es erlaubt, die Annäherung des Mediums an einen Füllstand zu detektieren, bevor das eigentliche Erreichen des Füllstands gemeldet wird.

Ein Grenzstandschalter signalisiert im Allgemeinen einen der beiden Zustände: "Frei" oder "Bedeckt".

Im Fall der Annäherungsfunktion wird dies in einer Ausgestaltung erweitert um die sich ergebenden Zwischenzustände, z. B. "Frei", "Annäherung", "Bedeckung" und "Überschritten".

Diese Zustände können entsprechend auf gängige Ausgangssignale wie z. B. 4...20 mA-Signale oder Steuerspannungen umgesetzt werden.

Vorteilhaft ist es für die Ausgestaltungen, wenn die Abstrahlvorrichtungen voneinander entkoppelt sind oder wenn sie so betrieben werden, dass eine Kopplung im Wesentlichen vermieden wird.

Daher wird in einer Ausgestaltung aus dem Abstrahlverhalten von mindestens zwei Abstrahlvorrichtungen eine Annäherung des Mediums an einen vorgebbaren Füllstand ermittelt, indem für die mindestens zwei Abstrahlvorrichtungen jeweils das Maß für die Impedanzanpassung ermittelt wird und indem die ermittelten Maße in Abhängigkeit vom Zeitpunkt einer jeweiligen Änderung ausgewertet werden.

Wird beispielsweise eine Überfüllsicherung realisiert, so kann davon ausgegangen werden, dass vor dem Erreichen eines höheren Füllstands zunächst der niedrigere Füllstand erreicht wird, insofern die zwei Abstrahlvorrichtungen zwei unterschiedlichen Füllständen zugeordnet sind. Das bedeutet, dass zuerst die untere Abstrahlvorrichtung das Erreichen des mit ihr verbundenen Füllstands anzeigt und dass erst anschließend die obere Abstrahlvorrichtung ein Abstrahlverhalten aufweist, das der Bedeckung durch das Medium entspricht.

Alternativ und ohne Betrachtung der Zeitpunkte wird nur ausgewertet, ob beide Abstrahlvorrichtungen das Erreichen des jeweils zugeordneten Füllstands anzeigen.

Die zeitliche Auswertung ist jedoch vor allem für eine Kalibrierung vorteilhaft, um auch ohne die feste Vorgabe einer Orientierung der Abstrahlvorrichtungen relativ zum Behälter eine zuverlässige Identifizierung der Füllstände zu ermöglichen.

Weiterhin erlaubt die zeitliche Auswertung in einer Ausgestaltung auch Aussagen über die Geschwindigkeit, mit der der Füllstand sich ändert.

In einer Ausgestaltung ist vorgesehen, dass das Abstrahlverhalten von mindestens zwei Abstrahlvorrichtungen im Sinne der Redundanz ausgewertet wird.

Dabei wird in einer Ausgestaltung das Abstrahlverhalten der mindestens zwei Abstrahlvorrichtungen in Hinblick auf einen gemeinsamen Füllstand und/oder gemeinsamen Füllstandsbereich ausgewertet.

Aus den vorhandenen Abstrahlvorrichtungen sind für die vorgenannte Ausgestaltung vorzugsweise diejenigen Abstrahlvorrichtungen ausgewählt oder in Bezug auf die Auswertung gruppiert, bei denen das Medium beim Erreichen des gleichen Füllstands bzw. eines gemeinsamen Füllstandsbereichs eine Änderung des Abstrahlverhaltens bewirkt.

In einer Ausgestaltung werden wenigstens zwei Abstrahlvorrichtungen gemeinsam ausgewertet, z. B. werden zumindest zum Teil die gleichen Komponenten oder Schaltungselemente verwendet.

In einer alternativen Ausgestaltung wird das Abstrahlverhalten der Abstrahlvorrichtungen separat ermittelt und die Auswertedaten werden zusammengefasst bzw. werden miteinander abgeglichen.

Die Auswertung der Daten der Abstrahlvorrichtungen als Zusammenführung der mit den Abstrahlvorrichtungen jeweils möglichen Einzelmessungen ist davon abhängig, ob die Abstrahlvorrichtungen sich auf gleiche oder unterschiedliche Füllstände des Mediums beziehen.

Die Zuordnung zwischen Abstrahlvorrichtung und Füllstand ist dabei abhängig von der relativen Anordnung der Abstrahlvorrichtungen - z. B. auf einem Trägerelement - zueinander und ist abhängig von der Art der Anbringung der Abstrahlvorrichtungen relativ zu bzw. in dem Behälter, in dem sich das Medium befindet.

Um für die Montage der Abstrahlvorrichtungen im Behälter eine größere Freiheit und Unabhängigkeit zu ermöglichen, ist in einer Ausgestaltung vorgesehen, dass frei konfiguriert wird, von welchen Abstrahlvorrichtungen das Abstrahlverhalten zusammen oder getrennt ausgewertet wird.

Das bedeutet, dass erst nach der Anbringung der Abstrahlvorrichtungen festgelegt wird, von welchen Abstrahlvorrichtungen das Abstrahlverhalten separat oder gemeinsam verarbeitet wird. Erst nach der Montage wird also ermittelt, welche Abstrahlvorrichtungen sich auf unterschiedliche und welche sich auf gleiche Füllstände bzw. Füllstandsbereiche beziehen.

Eine feste Vorgabe würde bedeuten, dass die Abstrahlvorrichtungen entsprechend einer Vorgabe im Behälter angebracht werden müssten. Dies wird durch die zuvor genannte Ausgestaltung vermieden bzw. ist nicht notwendig. Für die Flexibilität der Montage ist eine Kalibrierung der eingebauten Messanordnung vorteilhaft, die beispielsweise wie die folgende Variante ausgeführt ist.

In einer Ausgestaltung wird eine Kalibrierung vorgenommen, indem eine zeitliche Abfolge einer Änderung des Abstrahlverhaltens von einzelnen Abstrahlvorrichtungen ermittelt wird.

Vorzugsweise wird die Kalibrierung nicht bei einer gezielten Änderung des Füllstands des Mediums vorgenommen, sondern ergibt sich aus der prozessbedingten Veränderung des Füllstands des Mediums. Die Messvorrichtung wird also am Messort angebracht und sogleich in Betrieb genommen, wobei sich infolge der ersten Bestimmungen des Füllstands auch eine Kalibrierung für die zukünftige Anwendung ergibt. Die Kalibrierung beinhaltet insbesondere die Zuordnung zwischen den Abstrahlvorrichtungen und dem jeweiligen Füllstand.

Wird beispielsweise das Erreichen eines Füllstands für die Überfüllsicherung verwendet, so wird ausgehend von den zeitlichen Abfolgen der Änderungen des jeweiligen Abstrahlverhaltens bzw. ausgehend von einer Gleichzeitigkeit der Änderungen geschlussfolgert, wie die jeweils zugeordneten Füllstände zueinander angeordnet sind bzw. zusammenfallen.

Dies geschieht vorzugsweise während des normalen und prozessabhängigen Erreichens der jeweiligen Füllstände.

In einer Ausgestaltung wird nach dem Einbau einer der Umsetzung des Verfahrens dienenden Messvorrichtung und vorzugsweise vor einem ersten Befüllvorgang ein "Konfigurationsmodus" gestartet, in dem die Abstrahlvorrichtungen einzeln betrieben und insbesondere die jeweils auftretenden Messergebnisse separat verarbeitet werden.

In einer Ausgestaltung ist eine zentrale Abstrahlvorrichtung vorhanden, wobei die Messergebnisse der anderen Abstrahlvorrichtungen jeweils bezogen auf die zentrale Abstrahlvorrichtung ausgewertet werden.

In einer Ausgestaltung sind die restlichen Abstrahlvorrichtungen symmetrisch um die zentrale Abstrahlvorrichtung herum angeordnet. Dies erlaubt es, die Ausrichtung des Füllstandsensors noch präziser zu bestimmen.

In einer Ausgestaltung werden ausgehend davon, dass die zentrale Abstrahlvorrichtung eine Bedeckung signalisiert, die anderen Abstrahlvorrichtungen zu Gruppen gruppiert und Füllständen ober- bzw. unterhalb der zentralen Abstrahlvorrichtung zugeordnet.

Zudem wird in einer weiteren Ausgestaltung eine logische Verknüpfung innerhalb der Gruppen für eine Redundanzauslegung vorgenommen.

In einer Ausgestaltung ohne eine zentrale Abstrahlvorrichtung wird die Gruppierung vorgenommen, wenn die Hälfte der Abstrahlvorrichtungen eine Bedeckung meldet.

Alternativ oder ergänzend wird die Auswertung des Abstrahlverhaltens bzw. die Weiterverarbeitung der entsprechend ermittelten Werte oder Maßzahlen für zumindest einen Teil der Abstrahlvorrichtungen in einem Lernmodus eingelernt.

In dem Lernmodus wird das jeweilige Abstrahlverhalten des betrachteten Teils der Abstrahlvorrichtungen separat ausgewertet. Dann wird ausgehend von dem Abstrahlverhalten mindestens einer ausgewählten Abstrahlvorrichtung eine Bewertung des Abstrahlverhalten der anderen Abstrahlvorrichtungen vorgenommen.

Ist beispielsweise durch die Anordnung der Abstrahlvorrichtungen zueinander und auch infolge der Montage bekannt, dass sich drei unterschiedliche Füllstände überwachen lassen, so wird das Abstrahlverhalten der Abstrahlvorrichtung, der der mittlere Füllstand zugeordnet ist, besonders ausgewertet, insofern durch diese Abstrahlvorrichtung eine Mitte definiert ist.

Wird mit der Vorrichtung bzw. dem Verfahren ein Leerlaufschutz gebildet, so ist davon auszugehen, dass nach der Montage der Abstrahlvorrichtungen bzw. des Trägerelements bzw. der Vorrichtung, um die Messanordnung mit Behälter und Vorrichtung zu schaffen, das Medium in den Behälter eingebracht wird und auch die Abstrahlvorrichtungen übersteigt. Bei dieser ersten Befüllung kann daher die Kalibrierung durchgeführt werden, wobei jedoch die Auswertung bzw. Bewertung der Einzelergebnisse für den laufenden Messbetrieb unterschiedlich zum Modus Überfüllschutz ist.

Die folgenden Ausgestaltungen beziehen sich jeweils auf die Montage der Abstrahlvorrichtungen. Dabei kann sich die Orientierung der Abstrahlvorrichtungen zufällig ergeben oder wird in einer Ausgestaltung mit Absicht erzielt.

In einer Ausgestaltung werden die Abstrahlvorrichtungen derartig relativ zum Behälter befestigt, dass mindestens zwei Abstrahlvorrichtungen jeweils ein anderer Füllstand des Mediums zugeordnet ist.

Dabei ergibt sich die Zuordnung zwischen Füllstand und Abstrahlvorrichtung dadurch, dass das Medium beim Erreichen des jeweiligen Füllstands eine Änderung des Abstrahlverhaltens der dem Füllstand zugeordneten Abstrahlvorrichtung bewirkt.

In dieser Ausgestaltung befinden sich die montierten Abstrahlvorrichtungen auf unterschiedlichen Höhen des Behälters, so dass sie auch jeweils unterschiedliche Füllstände überwachen bzw. das Erreichen dieser Füllstände signalisierbar machen.

In einer Ausgestaltung wird die Überwachung von mehreren Füllständen erweitert, indem die Abstrahlvorrichtungen derartig relativ zum Behälter befestigt werden, dass mindestens drei Abstrahlvorrichtungen jeweils ein anderer Füllstand des Mediums zugeordnet ist.

Auch hier ist die angesprochene Zuordnung dadurch gegeben, dass das Medium beim Erreichen des jeweiligen Füllstands eine Änderung des Abstrahlverhaltens der dem Füllstand zugeordneten Abstrahlvorrichtung bewirkt.

Der mittlere Füllstand wird in einer Ausgestaltung als der eigentlich zu überwachende Füllstand definiert und erfährt eine besondere Auswertung.

Das Erreichen der Füllstände oberhalb bzw. unterhalb des mittleren Füllstands bedeuten dann, dass sich das Medium an den relevanten Füllstand annähert bzw. dass der relevante Füllstand bereits überschritten (bei der Überfüllsicherung) oder bereits unterschritten (bei der Leerlaufsicherung) ist. In dieser Ausgestaltung ist daher eine Art von Vorwarnung und eine ultimative Über- bzw. Leerlaufsignalisierung möglich.

In einer ergänzenden oder alternativen Ausgestaltung werden die Abstrahlvorrichtungen derartig relativ zum Behälter befestigt, dass mindestens zwei Abstrahlvorrichtungen jeweils im Wesentlichen ein gleicher Füllstand oder ein gleicher Füllstandsbereich des Mediums zugeordnet ist.

Für die Menge der Abstrahlvorrichtungen ergibt sich in dieser Ausgestaltung eine Positionierung, bei der mindestens zwei der vorhandenen Abstrahlvorrichtungen sich auf den gleichen Füllstand oder den gleichen Füllstandsbereich beziehen.

Die Größe bzw. Erstreckung des Füllstandsbereichs kann dabei durch den Anwender passend definiert werden, z. B. in Abhängigkeit von der zu erzielenden Auflösung der Füllstandsdetektierung.

Die Zuordnung zwischen Füllstand bzw. Füllstandsbereich und Abstrahlvorrichtung ist auch hier dadurch gegeben, dass das Medium beim Erreichen des Füllstands bzw. des Füllstandsbereichs eine Änderung des Abstrahlverhaltens der mindestens zwei dem Füllstand bzw. dem Füllstandsbereich zugeordneten Abstrahlvorrichtungen bewirkt.

Ob ein gleicher Füllstand - im Rahmen einer vorgebbaren Toleranz - überwacht wird, hängt dabei ab von der Geometrie der Abstrahlvorrichtungen und auch von der Orientierung der Abstrahlvorrichtungen relativ zu der Längsachse des Behälters, der entlang der Füllstand verläuft.

Ob ein Bereich überwacht wird, ist zusätzlich abhängig von der ggf. durch einen Benutzer einzustellende Vorgabe der zu erzielenden Ortsauflösung. Beziehen sich mehrere Abstrahlvorrichtungen auf den gleichen Füllstand bzw. auf den gleichen Füllstandsbereich, so ist eine Redundanz gegeben. Dies kann für die Zuverlässigkeit der Signalisierung des Erreichens genutzt werden oder dies kann auch dafür verwendet werden, dass z. B. Alterungsprozesse oder Fehler in den einzelnen Abstrahlvorrichtungen erkannt werden.

Ein Vorteil der Redundanz ist stets, dass auch beim Ausfall einer Abstrahlvorrichtung Messungen mit den verbleibenden Abstrahlvorrichtungen der gleichen Gruppe weiterhin zuverlässig möglich sind.

In Richtung der Überwachung zielt auch die folgende alternative oder ergänzende Ausgestaltung.

Dabei ist vorgesehen, dass aus einer zeitlichen Änderung des Abstrahlverhaltens von mindestens einer Abstrahlvorrichtung eine Aussage über einen Zustand der Abstrahlvorrichtung ermittelt wird.

Über die zeitliche Entwicklung des Abstrahlverhaltens, z. B. durch eine graduelle Veränderung der Resonanzfrequenz oder durch eine Verbreiterung der Resonanzkurve usw. kann erkannt werden, wie sich die Abstrahlvorrichtung entwickelt (z. B. in Folge von Alterung) bzw. was mit der Abstrahlvorrichtung passiert (z. B. in Folge von Ablagerungen).

In einer damit einhergehenden Ausgestaltung wird die ermittelte Aussage bei der Bestimmung des Füllstands des Mediums verwendet.

Ausgehend von der Entwicklung der Abstrahlvorrichtung findet in einer Ausgestaltung eine entsprechende Nach-Kalibrierung statt.

Eine solche Nach-Kalibrierung erfolgt beispielsweise bei einer Ausgestaltung wie folgt:
Eine Anhaftung des Mediums an einer Abstrahlvorrichtung führt ggf. nur zu einer Verschiebung der Resonanzfrequenz der betroffenen Abstrahlvorrichtung und verhindert nicht die Detektion des Wechsels zwischen dem freien und dem bedeckten Zustand. Der Ansatz führt jedoch dazu, dass die Frequenz nachgeführt werden muss, relativ zu der ein Wechsel der Bedeckung erkannt wird.

Diese Nachführung geschieht dadurch, dass die Messergebnisse innerhalb einer Gruppe von Abstrahlvorrichtungen, die sich auf den gleichen Füllstand oder auf den gleichen Füllstandsbereich beziehen, miteinander verglichen werden und dass eine Anpassung bei der Verarbeitung der Abstrahlvorrichtung vorgenommen wird, deren Ergebnis sich nicht mit den anderen Ergebnissen deckt.

In einer Ausgestaltung wird ausgehend von dem ermittelten Zustand einer Abstrahlvorrichtung die Abstrahlvorrichtung nicht mehr für die Messungen verwendet.

Die Aussage über den Zustand der Abstrahlvorrichtung bezieht sich in einer Ausgestaltung auf einen Grad einer Verschmutzung oder einer Alterung der betroffenen Abstrahlvorrichtung.

In den folgenden Ausgestaltungen wird zusätzlich zum Detektieren des Füllstands mit den Abstrahlvorrichtungen wenigstens eine Eigenschaft des Mediums ermittelt.

Daher ist in einer Ausgestaltung vorgesehen, dass das Abstrahlverhalten mindestens einer Abstrahlvorrichtung in Hinblick auf mindestens eine Eigenschaft des Mediums zusätzlich zum Füllstand ausgewertet wird.

Für die vorgenannte Ausgestaltung wird in einer Variante darauf Bezug genommen, dass das Abstrahlverhalten der Abstrahlvorrichtungen davon abhängt, welche Permittitvität das Medium aufweist, das die betroffene Abstrahlvorrichtung bedeckt.

Ändert sich daher der Füllstand nicht, ändert sich jedoch das Abstrahlverhalten, so kann daraus auf eine Änderung der Permittivität geschlossen werden.

Alternativ wird bei einem bekannten Zusammenhang, z. B. durch entsprechend hinterlegte Daten oder Funktionen, aus der ermittelten Resonanzfrequenz ein Wert für die Permittivität ermittelt.

Dass der Füllstand sich nicht geändert hat, kann z. B. festgestellt werden, indem das Abstrahlverhalten von Abstrahlvorrichtungen ausgewertet wird, die anderen Füllständen oder dem gleichen Füllstand zugeordnet sind.

Daher wird in einer Ausgestaltung ausgehend von einer Resonanzfrequenz mindestens einer Abstrahlvorrichtung eine Aussage über eine Permittivität des Mediums ermittelt.

Ein besonderer Anwendungsfall, in dem die Erfindung sehr gut umgesetzt werden kann, besteht dann, wenn das Medium nicht nur aus einer Substanz besteht.

Befinden sich in einem Behälter unterschiedliche Substanzen, die sich nicht vermischen, so ergibt sich üblicherweise eine Trennschicht.

Unterscheiden sich die Substanzen, die gemeinsam das Medium in dem Behälter bilden, so wird in einer Ausgestaltung das Vorliegen einer Trennschicht erkannt und werden Daten zur Trennschicht ermittelt.

In einer Ausgestaltung wird beim Vorliegen von unterschiedlichen Resonanzfrequenzen unterschiedlicher Abstrahlvorrichtungen eine Aussage über das Vorliegen einer Trennschicht im Medium gewonnen.

Ergibt sich also für mehrere Abstrahlvorrichtungen, dass das Medium die Abstrahlvorrichtungen jeweils bedeckt, sind jedoch die Resonanzfrequenzen - als ein Kennzeichen für das Abstrahlverhalten - so unterschiedlich, dass sich daraus ergibt, dass sich die Permittivitäten der die Abstrahlvorrichtungen jeweils bedeckenden Substanz unterscheiden, so kann daraus geschlussfolgert werden, dass eine Trennschicht vorliegt bzw. dass wenigstens zwei unterschiedliche Substanzen oder Phasen vorhanden sind.

In Bezug auf die Trennschicht wird in der folgenden Ausgestaltung sogar die Höhe der Trennschicht ermittelt. Dafür sind wenigstens die folgenden Schritte vorgesehen:
Ausgehend vom Abstrahlverhalten von mindestens zwei Abstrahlvorrichtungen, die unterschiedlichen Füllständen zugeordnet sind, wird das Erreichen des jeweiligen Füllstands durch das - aus mehreren Substanzen bzw. Phasen oder allgemein Zustandsformen (z. B. Flüssigkeit und Schaum) bestehende - Medium ermittelt.

Dann wird eine erste Zeitdauer zwischen dem Erreichen des jeweiligen Füllstands ermittelt, also die Zeitdauer, die zwischen den Zeitpunkten liegt, zu denen die Füllstände erreicht werden. Aus der ersten Zeitdauer und aus einem bekannten Füllstandsabstand - also einer Höhendifferenz - zwischen den den zwei Abstrahlvorrichtungen zugeordneten Füllständen wird eine Füllgeschwindigkeit ermittelt.

Schließlich wird für eine der zwei Abstrahlvorrichtungen eine zweite Zeitdauer ermittelt, die zwischen dem Erreichen des der Abstrahlvorrichtung zugeordneten Füllstands und einer Änderung der Resonanzfrequenz der Abstrahlvorrichtung liegt.

Wird die Abstrahlvorrichtung das erste Mal durch das Medium bedeckt, so hat das Medium mit der oberen Substanz der zwei Substanzen den zugehörigen Füllstand erreicht. Ändert sich die Resonanzfrequenz, so bedeutet dies, dass die Abstrahlvorrichtung von der nächstfolgenden Substanz bedeckt wird. Daher ergibt sich aus der zweiten Zeitdauer, wie lange die obere Substanz sich über die Abstrahlvorrichtung hinwegbewegt hat.

Die Erfindung bezieht sich weiterhin auch auf eine Vorrichtung zur Umsetzung des Verfahrens zur Bestimmung des Füllstands eines Mediums in einem Behälter.

Auf die Vorrichtung beziehen sich die folgenden Ausgestaltungen. Dabei gelten die Ausführungen, Ausgestaltungen, Vorteile und Erläuterungen entsprechend auch für das zuvor beschriebene Verfahren. Umkehrt lassen sich auch die Details des Verfahrens in Form der Vorrichtung realisieren.

In einer Ausgestaltung verfügt die Vorrichtung über mindestens eine Elektronikvorrichtung und mindestens eine Signalleiteranordnung. Die Elektronikvorrichtung beaufschlagt die Signalleiteranordnung mit elektromagnetischen Signalen.

Weiterhin ist in einer Ausgestaltung vorgesehen, dass die Signalleiteranordnung mehrere Abstrahlvorrichtungen aufweist und dass die Elektronikvorrichtung mindestens ein Maß für ein Abstrahlverhalten mindestens einer Abstrahlvorrichtung bereitstellt.

Bei den elektromagnetischen Signalen handelt es sich insbesondere um Mikrowellensignale. Daher kann in einer Ausgestaltung die erfindungsgemäße Vorrichtung insbesondere als Hochfrequenz (HF-)FÜllstandsschalter bezeichnet werden.

Die Abstrahlvorrichtungen, von denen mindestens zwei vorhanden sind und die auch als Einzelelemente des HF-Füllstandsschalters benannt werden können, sind in einer Ausgestaltung als Impedanzwandler zu verstehen.

Dabei wird die Wellenimpedanz einer Leitung, über die die Abstrahlvorrichtungen mit den elektromagnetischen Signalen beaufschlagt werden, angepasst an die Wellenimpedanz des Bereichs vor den Abstrahlvorrichtungen. Dieser Bereich ist in dem Fall, dass die Vorrichtung als Überlaufschutz verwendet wird, insbesondere ein Freiraum.

Indem die Impedanzanpassung überwacht wird, kann beim Auftreten einer Veränderung der Anpassung davon ausgegangen werden, dass sich eine Änderung im Raum vor der Abstrahlvorrichtung ereignet hat. Bei der Verwendung als Grenzstandstandschalter handelt es sich dabei um eine Änderung des Grads der Bedeckung.

Die Abstrahlvorrichtungen sind in einer Ausgestaltung als Antennen und in einer weiteren Ausgestaltung insbesondere als Patchantennen ausgeführt. Vorzugsweise sind die Abstrahlvorrichtungen bzw. Patchantennen planar ausgeführt.

Die Abstrahlvorrichtungen verfügen vorzugsweise über eine relativ schmalbandige Impedanzanpassung.

Bei Patchantennen als beispielhafter Ausführung der Abstrahlvorrichtungen lässt sich eine solche schmalbandige Impedanzanpassung darauf zurückführen, dass über eine Patchantenne die Halbwellenlängenresonanz realisiert ist. Dabei erfährt nur diejenige Frequenz eine Impedanzanpassung, deren halbe Wellenlänge genauso groß ist wie die geometrische Länge der Patchantenne.

In einer Ausgestaltung werden die Abstrahlvorrichtungen derartig ausgestaltet, dass die Abstrahlrichtung orthogonal zu beiden Ausdehnungsrichtungen der als Antenne ausgeführten Abstrahlvorrichtung ist.

Für die Impedanzanpassung sind die die jeweilige Abstrahlvorrichtung bzw. die jeweilige Patchantenne umgebenden Materialien bedeutsam, da die Materialien die Wellenlänge des Signals, für das die Impedanzanpassung erfolgt, mit der Wurzel der effektiven Permittivität verkürzen.

Die Permittivität, gemeinhin mit dem griechischen Kleinbuchstaben Epsilon bezeichnet, wird auch dielektrische Leitfähigkeit oder dielektrische Funktion genannt und beschreibt die Durchlässigkeit eines Materials für elektrische Felder.

Die Verknüpfung zwischen Materialpermittivität und der Impedanzanpassungseigenschaft wird bei der erfindungsgemäßen Vorrichtung verwendet, um den Füllstand des Mediums in einem Behälter zu erkennen.

Ändert sich das Material (z. B. durch den Wechsel von Luft zu dem eigentlich zu detektierenden Medium) und somit auch die Permittivität vor einer Abstrahlvorrichtung oder insbesondere vor einer Patchantenne, so ändert sich die effektive Permittivität um die Antenne/Abstrahlvorrichtung herum und damit auch die Frequenz, für die die Abstrahlvorrichtung eine Impedanzanpassung darstellt.

Wird daher umgekehrt von der erfindungsgemäßen Vorrichtung eine Änderung der Impedanzanpassung erkannt, so lässt sich dies auf eine Füllstandsänderung zurückführen.

Alternativ oder ergänzend wird auf eine Änderung der Materialeigenschaften geschlossen.

Die obigen Zusammenhänge lassen sich mit anderen Worten auch wie folgt beschreiben, wenn der beispielhafte Fall der Anwendung als Überlaufschutz betrachtet wird:
Wird eine Abstrahlvorrichtung mit einem elektromagnetischen Signal gespeist, dessen Frequenz gleich der Resonanzfrequenz ist, die sich bei der durch das Medium nicht bedeckter, also freier Abstrahlvorrichtung einstellt, und ist die Abstrahlvorrichtung während der Beaufschlagung mit dem Signal nicht durch das Medium bedeckt, so wird das Signal in den Innenraum des Behälters, der z. B. ein Tank ist, abgestrahlt.

Da in diesem Fall keine oder nur eine sehr geringe Reflexion an der als Antenne ausgeführten Abstrahlvorrichtung auftritt, ist die Energie der von der Abstrahlvorrichtung rücklaufenden Welle äußerst gering.

Verändert sich der Füllstand des Mediums in dem Behälter, so dass die Abstrahlvorrichtung erreicht wird, so verschiebt sich auch die Resonanzfrequenz der Abstrahlvorrichtung. Dadurch erfährt jedoch das eingespeiste elektromagnetische Signal eine stärkere Reflexion, die wiederum in einer höheren Energie der rücklaufenden Welle resultiert.

Je nach der Größe der Änderung der Permittivität, die sich durch den Übergang zwischen freier und durch das Medium bedeckter Abstrahlvorrichtung ergibt, strahlt die Abstrahlvorrichtung auf einer anderen, benachbarten Frequenz ab (kleine Permittivitätsänderung) oder es findet keine Abstrahlung mehr statt (große Permittivitätsänderung).

Der beschriebene Effekt lässt sich als Nahfeldeffekt der Antenne bzw. der Abstrahlvorrichtung auffassen.

Das von der Elektronikvorrichtung ermittelte Maß für ein Abstrahlverhalten mindestens einer Abstrahlvorrichtung besteht daher in einer Ausgestaltung darin, dass erkannt wird, dass sich die Resonanzfrequenz zumindest der einen Abstrahlvorrichtung geändert hat. Ausgehend von der Änderung kann dann darauf geschlossen werden, dass sich der Grad der Bedeckung der Abstrahlvorrichtung durch das Medium in dem Behälter geändert hat oder dass eine Änderung beim Medium selbst vorliegt.

Durch die Mehrzahl an einzeln betreibbaren Abstrahlvorrichtungen stehen mehrere Einzelergebnisse zur Verfügung, die für die Bestimmung des Füllstands kombiniert werden können.

Die Messergebnisse der - insbesondere aller - Abstrahlvorrichtungen werden daher in einer Ausgestaltung durch eine geeignete Verarbeitungseinheit (z. B. eine Messvorrichtung oder allgemein eine Elektronikeinheit), die z. B. durch einen Mikroprozessor realisiert ist, zu einem Gesamtergebnis verarbeitet. In einer anderen Ausgestaltung werden die Einzelergebnisse durch Logikbausteine zusammengeführt.

Die folgenden Ausführungen beziehen sich auf vorteilhafte Ausgestaltungen der Vorrichtungen, die teilweise der Umsetzung der zuvor beschriebenen Zusammenhänge dienen.

In einer Ausgestaltung ist vorgesehen, dass die Elektronikvorrichtung als Maß für das Abstrahlverhalten von mindestens einer Abstrahlvorrichtung mindestens ein Impedanzverhalten der mindestens einen Abstrahlvorrichtung auswertet.

In dieser Ausgestaltung überwacht die Elektronikvorrichtung vorzugsweise die Impedanzanpassung von mindestens einer Abstrahlvorrichtung.

Ändert sich die Impedanzanpassung, so wird dies in einer Ausgestaltung darauf zurückgeführt, dass sich eine Änderung vor der Abstrahlvorrichtung, d. h. insbesondere innerhalb des Behälters und damit auf der Abstrahlseite der Abstrahlvorrichtung eingestellt hat. Diese Änderung wird dabei insbesondere als Füllstandsänderung interpretiert und auch als solche signalisiert.

In einer damit verbundenen Ausgestaltung ermittelt die Elektronikvorrichtung einen Wert einer Impedanz und/oder eine Änderung einer Impedanz der mindestens einen Abstrahlvorrichtung.

In einer Ausgestaltung ermittelt die Elektronikvorrichtung einen absoluten Wert für die Impedanz und stellt alternativ oder ergänzend fest, ob sich die Impedanz geändert hat.

In einer Ausgestaltung wird für das Maß des Abstrahlverhaltens von der Elektronikvorrichtung mindestens eine Eingangsreflexion der mindestens einen Abstrahlvorrichtung ermittelt. In dieser Ausgestaltung wertet die Elektronikvorrichtung also die Eingangsreflexion mindestens einer Abstrahlvorrichtung aus, die sich infolge der Beaufschlagung mit den elektromagnetischen Signalen ergibt. Die Reflexion ist daher in dieser Ausgestaltung ein Maß für die Anpassung der elektromagnetischen Signale an die vorhandenen Resonanzbedingungen.

In einer Ausgestaltung beaufschlagt die Elektronikvorrichtung mindestens eine Abstrahlvorrichtung mit elektromagnetischen Signalen einer vorgebbaren Frequenz.

Die Frequenz hängt dabei in einer Ausgestaltung davon ab, ob die erfindungsgemäße Vorrichtung als Überfüll- oder als Leerlaufschutz verwendet wird, d. h. ob der Wechsel vom unbedeckten zum bedeckten oder vom bedeckten zum freien Zustand erkannt werden soll.

In einer weiteren Ausgestaltung hängt die Frequenz von den Materialeigenschaften (wie z. B. der Permittivität) der die Abstrahlvorrichtung umgebenden Materialien ab. Dies bezieht sich daher auch auf die Beschaffenheit des Trägerelements bzw. einer ggf. vorhandenen Schutzschicht.

Befinden sich alle Abstrahlvorrichtungen auf bzw. in einem Trägerelement, so vereinfacht dies die Montage im Prozessraum durch die Reduktion auf ein mechanisches Bauteil.

In einer Ausgestaltung werden mehrere Abstrahlvorrichtungen mit dem gleichen elektromagnetischen Signal beaufschlagt.

In einer Ausgestaltung entspricht die vorgebbare Frequenz der elektromagnetischen Signale im Wesentlichen der Resonanzfrequenz der vom Medium freien Abstrahlvorrichtung. In dieser Ausgestaltung wird erkannt, wenn das Medium die betreffende Abstrahlvorrichtung erreicht, d. h. es findet eine Überfüllsicherung statt.

In einer alternativen Ausgestaltung, d. h. insbesondere im Fall der Anwendung als Pumpen- oder Leerlaufschutz, entspricht die vorgebbare Frequenz im Wesentlichen der Resonanzfrequenz der vom Medium bedeckten Abstrahlvorrichtung.

Ändert sich das Medium vor der Abstrahlvorrichtung oder ist die Abstrahlvorrichtung nicht mehr durch das Medium bedeckt, so entspricht die Frequenz der Signale, mit denen die Abstrahlvorrichtung beaufschlagt wird, nicht mehr der aktuellen Resonanzfrequenz. Dies kann entsprechend von der Elektronikvorrichtung erkannt und identifiziert bzw. signalisiert werden.

In einer alternativen oder ergänzenden Ausgestaltung variiert die Elektronikvorrichtung die Frequenz der elektromagnetischen Signale, mit denen eine Abstrahlvorrichtung oder mehrere Abstrahlvorrichtungen beaufschlagt wird bzw. werden, innerhalb eines vorgebbaren Frequenzbands. In dieser Ausgestaltung wird ein Frequenzsweep durchgeführt und damit das Frequenzverhalten der Abstrahlvorrichtung bzw. Abstrahlvorrichtungen vermessen. Dies erlaubt beispielsweise unter einer Vielzahl von Messumgebungen bzw. Prozessbedingungen eine sehr genaue Ermittlung der aktuellen Resonanzfrequenz, die wiederum Aufschluss über die Umgebung und damit auch über das Messmedium geben kann.

Für die eigentliche Bestimmung des Füllstands durch die einzelnen Abstrahlvorrichtungen, d. h. ob der jeweilige Füllstand erreicht ist oder nicht, ist in einer Ausgestaltung vorgesehen, dass die Elektronikvorrichtung mindestens eine Reflektorschaltung aufweist.

Die Reflektorschaltung ist dabei mindestens einer Abstrahlvorrichtung zugeordnet.

Weiterhin ist die Reflektorschaltung derartig ausgestaltet, dass sie ein Maß für ein Abstrahlverhalten der Abstrahlvorrichtung bereitstellt.

Die Reflektorschaltung erkennt, ob die Abstrahlvorrichtung von dem Medium bedeckt wird bzw. ob sich vor der Abstrahlvorrichtung z. B. Gas oder allgemein Umgebungsluft befindet.

Das Maß für das Abstrahlverhalten besteht in einer Ausgestaltung in der Aussage, ob das Medium die Abstrahlvorrichtung bedeckt oder nicht.

Für die Reflektorschaltungen bzw. allgemein die messtechnische Ausgestaltung der Elektronikvorrichtung seien die folgenden beispielhaften Ausgestaltungen genannt.

Bei einer absolutwertigen CW- (für continuous wave) Detektion wird die jeweilige Abstrahlvorrichtung kontinuierlich mit einem mono-frequenten Signal gespeist. Die Frequenz wird in einer Ausgestaltung derart gewählt, dass sie der Resonanzfrequenz der Abstrahlvorrichtung in dem Fall entspricht, dass das Medium die Antenne nicht berührt. Ist die Antenne daher frei, so strahlt sie die elektromagnetischen Signale ab.

Die Reflektorschaltung überwacht daher dauerhaft die Anpassung der Antenne bei der eingestellten Speisefrequenz.

In einer Ausgestaltung gibt die Reflektorschaltung eine Gleichspannung aus, die abhängig ist von dem Verhältnis zwischen der Leistung, mit der die Antenne beaufschlagt wird, und der reflektierten Leistung.

Ein Komparator, der in der Elektronikvorrichtung der Reflektorschaltung nachgeschaltet ist, vergleicht in einer Ausgestaltung die von der Reflektorschaltung erzeugte Gleichspannung mit einer extern vorgegebenen Vergleichsspannung und erzeugt eine Bewertung.

Befindet sich vor der Antenne - im Fall der Anwendung als Überlaufschutz, also für das Erkennen des Erreichens eines Füllstands - kein Medium oder insbesondere Umgebungsluft, so ist die Antenne angepasst und ihre Eingangsreflexion klein. Daher erzeugt die Reflektorschaltung eine Spannung, die unterhalb der Vergleichsspannung liegt, so dass der Komparator einen Low-Pegel ausgibt.

Befindet sich das Medium - in der vorgenannten Anwendungsart - vor der Antenne, so verschiebt sich die Resonanzfrequenz und so weist die Antenne ein schlechteres Anpassverhalten bei der angelegten Frequenz des Signals auf. Dadurch erhöht sich die Eingangsreflexion der Antenne und hierdurch auch die von der Reflektorschaltung erzeugte Gleichspannung. Ist die Gleichspannung größer als die Vergleichsspannung, so gibt der Komparator einen High-Pegel aus, der das Erreichen des Grenzwerts signalisiert.

Für den Anwendungsfall, dass die jeweilige Abstrahlvorrichtung mit einer Schutzschicht überzogen ist, oder in dem Fall, dass das zu detektierende Medium eine sehr geringe Permittivität aufweist, ist in einer Ausgestaltung vorgesehen, dass die zuvor beschriebene absolutwertige CW-Detektion zu einer komplexen Detektion erweitert wird.

Dabei werden in Ergänzung zu der obigen Ausgestaltung sowohl das Signal, mit dem die Abstrahlvorrichtung beaufschlagt wird, als auch das von der Antenne abgegriffene Reflexionssignal aufgeteilt. Beide Signale werden ergänzend zu der oben beschriebenen einfachen Reflektorschaltung auch einer zweiten Mess- bzw. Auswertestelle zugeführt. Dabei ist in einem der beiden Signalpfade ein 90°-Phasenschieber vorgesehen.

Die vorgenannte Reflektorschaltung liefert das "Inphase"-Signal und die zweite Messstelle das "Quadratur"-Signal.

Beide Signale werden in einer Ausgestaltung vorzugsweise digitalisiert, um beispielweise in einem Mikroprozessor weiterverarbeitet zu werden. Hierbei ist dann auch eine Phasenauswertung des reflektierten Signals möglich. Dies hat den Vorteil, dass der Phasenversatz durch die Reflexion der Signale am Medium ein sehr empfindliches Maß ist.

In dem Anwendungsfall, in dem das Medium hohe Verluste der Signale der Abstrahlvorrichtungen bewirkt, verbreitert sich die Anpassungskurve der Antenne über der Frequenz.

Um dennoch sicher das Erreichen eines Grenzstands zu detektieren, ist daher in einer Ausgestaltung vorgesehen, dass eine breitbandige Anpasskurve der Abstrahlvorrichtungen ermittelt, d. h. vermessen wird.

Daher erfolgt in einer Ausgestaltung eine Beaufschlagung der Abstrahlvorrichtungen mit Signalen, die innerhalb eines vorgebbaren Frequenzbereichs liegen.

Die Gleichspannung der jeweiligen Reflektorschaltung wird in einer Ausgestaltung direkt digitalisiert. Dies erlaubt es, den jeweiligen Wert der Reflexion der Frequenz des Signals zuzuordnen, mit dem die jeweilige Abstrahlvorrichtung beaufschlagt worden ist.

Nach einem vollständigen Frequenzsweep wird die gewonnene Anpasskurve ausgewertet, wobei die niedrigste ermittelte Gleichspannung der Reflektorschaltung der Resonanzfrequenz der Abstrahlvorrichtung zugeordnet ist.

Die Breitbanddetektion wird in einer Ausgestaltung mit der oben beschriebenen komplexen Variante und der damit möglichen Phasenauswertung kombiniert.

In einer Ausgestaltung wird der Reflektorschaltung das Signal zugeführt, mit dem die zugeordnete Abstrahlvorrichtung beaufschlagt wird.

Eine Ausgestaltung besteht darin, dass die Reflektorschaltung die Anpassung mindestens einer Abstrahlvorrichtung während der Beaufschlagung mit den elektromagnetischen Signalen überwacht.

In einer Ausgestaltung ist die Reflektorschaltung nur einer einzigen Abstrahlvorrichtung zugeordnet, indem die Reflektorschaltung der genau einen Abstrahlvorrichtung zugeordnet ist und ein Maß für das Abstrahlverhalten nur der einen Abstrahlvorrichtung bereitstellt.

In einer weiteren Ausgestaltung ist jeder Abstrahlvorrichtung jeweils eine Reflektorschaltung zugeordnet. Daher ist in dieser Ausgestaltung die Anzahl der Abstrahlvorrichtungen gleich der Anzahl der Reflektorschaltungen.

In einer anderen Ausgestaltung ist die mindestens eine Reflektorschaltung mehreren Abstrahlvorrichtungen zugeordnet und stellt mindestens ein Maß für das Abstrahlverhalten der ihr zugeordneten Abstrahlvorrichtungen bereit.

Die einzelnen Reflektorschaltungen erzeugen jeweils eine Information darüber, ob - je nach der Art der Anwendung - das Medium den der Abstrahlvorrichtung zugeordneten Füllstand erreicht oder unterschritten hat. Die Einzelergebnisse der Reflektorschaltungen werden anschließend in der Elektronikvorrichtung zusammen verarbeitet bzw. insgesamt ausgewertet.

In einer Ausgestaltung ist die Elektronikvorrichtung derartig ausgestaltet, dass die Elektronikvorrichtung nach der Beaufschlagung mindestens einer Abstrahlvorrichtung mit mindestens einem elektromagnetischen Signal mindestens ein Reflexionssignal von der Abstrahlvorrichtung abgreift und auswertet.

In den folgenden Ausgestaltungen wird die reine Bestimmung bzw. Überwachung des Füllstands auf weitere Messgrößen erweitert.

Daher ermittelt in einer Ausgestaltung die Elektronikvorrichtung ausgehend vom Abstrahlverhalten der Abstrahlvorrichtungen zusätzlich zum Füllstand mindestens eine weitere Aussage über das Medium.

Bei der weiteren Aussage handelt es sich in einer Ausgestaltung um eine Aussage über eine Trennschicht zwischen zwei unterschiedlichen Phasen oder Substanzen im Medium des Behälters.

In einer alternativen oder ergänzenden Ausgestaltung ermittelt die Elektronikvorrichtung eine Aussage über eine Permittivität des Mediums.

Beispielsweise aufgrund einer präzisen Auswertung wenigstens des reflektierten Signals wird eine Aussage über das Medium getätigt, das sich vor der Abstrahlvorrichtung befindet. Für die Differenzierung zwischen unterschiedlichen Medien bzw. für die Feststellung einer Veränderung des Mediums wird dabei die Permittivität herangezogen.

In einer Ausgestaltung wird ausgehend von der Permittivität das Vorliegen von unterschiedlichen Materialien erkannt.

Für die Identifikation des Mediums über die Permittivität wird in einer Ausgestaltung eine breitbandige Messung vorgenommen, in der ein Frequenzband mit den elektromagnetischen Signalen durchfahren wird, um die aktuelle Resonanzfrequenz und darüber das Medium zu ermitteln.

Für die Bestimmung der zusätzlichen Aussagen ist dabei auch relevant, mit welchem Medium eine Kalibrierung der erfindungsgemäßen Vorrichtung durchgeführt worden ist.

In einer Ausgestaltung handelt es sich bei dem Kalibriermedium um Luft.

In einer alternativen Ausgestaltung ist das zu überwachende bzw. zu vermessende Medium das Kalibriermedium.

Um auch geringe Änderungen bzw. Unterschiede der Permittivitäten zu erkennen, wird in einer Ausgestaltung der Phasenversatz des komplexen Phasors ausgewertet.

In einer Ausgestaltung wird eine Verschmutzung mindestens einer Abstrahlvorrichtung durch Ablagerungen des Mediums und sich dadurch graduell ändernde Resonanzbedingungen erkannt.

Insgesamt wird bei der erfindungsgemäßen Vorrichtung daher über die Elektronikvorrichtung eine Änderung eines Resonanzverhaltens von mindestens einer Abstrahlvorrichtung ermittelt bzw. erkannt.

Durch die Vielzahl der Abstrahlvorrichtungen, die in einer Ausgestaltung im Wesentlichen gleich ausgestaltet sind, lassen sich unterschiedliche Einzelmesswerte generieren und zu einem Gesamtbild vereinen. Es werden also quasi mehrere Einzelsensoren zu einem Multisensor kombiniert.

In einer Ausgestaltung wird jede Abstrahlvorrichtung einzeln ausgewertet.

Daran schließen sich die folgenden Ausgestaltungen an:
In einer Variante ist jede Abstrahlvorrichtung mit einer eigenen Signalspeisung und einer eigenen Reflektorschaltung verbunden.
In einer alternativen Ausgestaltung werden die Abstrahlvorrichtungen von einer Signalquelle gespeist, haben jedoch jeweils eine eigene Reflektorschaltung.
In einer zusätzlichen Ausgestaltung werden die Abstrahlvorrichtungen durch einen gemeinsamen breitbandigen Signalgenerator gespeist. Dabei unterscheiden sich jedoch die Leitungslängen zwischen Signalgenerator und den einzelnen Abstrahlvorrichtungen derartig voneinander, dass die Reflexionen zu deutlich unterschiedlichen Zeiten an den Abstrahlvorrichtungen auftreten und eine Zuordnung zu den Abstrahlvorrichtungen erlauben.
In einer Ausgestaltung wird mindestens ein Teil der Abstrahlvorrichtungen gemeinsam ausgewertet.
In einer Ausgestaltung ist vorgesehen, dass ein Trägerelement die Signalleiteranordnung zumindest teilweise trägt. Auf oder in dem Trägerelement ist wenigstens ein Teil der Abstrahlvorrichtungen angebracht.
In einer weiteren Ausgestaltung befinden sich alle Abstrahlvorrichtungen auf oder in dem Trägerelement, so dass die Abstrahlvorrichtungen über das Trägerelement auch an ihrem Einsatzort montiert werden können.

Die Mehrzahl an Abstrahlvorrichtungen auf einem Trägerelement kann zu einer Verkopplung der einzelnen Abstrahlvorrichtungen führen. Dies kann zur Folge haben, dass die Hochfrequenz-Signale von benachbarten Abstrahlvorrichtungen übersprechen.

Für eine Entkopplung ist daher beispielsweise mit einer der folgenden Methoden zu sorgen: Raum-, Zeit-, Frequenz-, Code- und/oder Polarisationsmultiplex.

In einer Ausgestaltung ist vorgesehen, dass nicht nur das Trägerelement die Signalleiteranordnung zumindest teilweise trägt, sondern dass auch das Trägerelement in eine Wandung des Behälters einbringbar ist.

In einer Ausgestaltung ist das Trägerelement flanschartig ausgestaltet.

Bei der erfindungsgemäßen Vorrichtung handelt es sich insbesondere um einen sogenannten Grenzstandschalter, der anzeigt, ob das Medium einen Füllstand - also einen Grenzstand - erreicht oder unterschritten hat.

Die erfindungsgemäße Vorrichtung detektiert den Füllstand des Mediums, indem eine Signalleiteranordnung mit elektromagnetischen Signalen beaufschlagt wird und indem dadurch erkannt wird, ob das Medium die Signalleiteranordnung bedeckt.

Die Signalleiteranordnung verfügt dabei über mehrere Abstrahlvorrichtungen, die jeweils mit den elektromagnetischen Signalen beaufschlagt werden. Durch die Mehrzahl der Abstrahlvorrichtungen lässt sich beispielsweise Redundanz erzeugen. Weiterhin können so auch mehrere Grenzstände erkannt werden. Zudem ist es möglich, Messwerte zu verifizieren.

Die Signalleiteranordnung, d. h. die Abstrahlvorrichtungen sind dabei in bzw. auf einem Trägerelement angebracht. Das Trägerelement dient als Substrat, um eine mechanische Struktur zu erhalten bzw. um die Mehrzahl an Abstrahlvorrichtungen einfacher zu montieren.

Die Abstrahlvorrichtungen befinden sich zumindest teilweise insbesondere auf der - im eingebauten Zustand - dem Medium zugewandten Seite des Trägerelements oder sind zumindest derartig in oder auf dem Trägerelement befestigt, dass eine Wechselwirkung mit dem Medium stattfinden kann.

In einer Ausgestaltung sind die Abstrahlvorrichtungen separat erzeugte Komponenten, die nach ihrer Herstellung auf oder in das Trägerelement auf- bzw. eingebracht sind.

In einer weiteren Ausgestaltung werden die Abstrahlvorrichtungen erst auf bzw. in dem Trägerelement erzeugt.

Das Trägerelement ist dabei insbesondere derartig ausgestaltet, dass es in eine Wandung des Behälters einbringbar ist. Das Trägerelement kann also insbesondere in eine entsprechende Aussparung in der Wandung eingebracht werden, wofür die Dimensionierungen aufeinander abzustimmen sind.

Da es sich bei der Vorrichtung vorzugsweise um einen Grenzstandschalter handelt, ist das Trägerelement vorzugsweise in eine Seitenwandung des Behälters einbringbar.

In einer Ausgestaltung ist das Trägerelement insbesondere in die Wandung einschraub- bzw. eindrehbar. In dieser Ausgestaltung ergibt sich insgesamt ein Füllstands- oder Grenzstandschalter, der als Einschraubsensor ausgeführt ist.

Durch die - mindestens zwei - Abstrahlvorrichtungen wird erkannt, ob sich das Medium in der Nähe der jeweiligen Abstrahlvorrichtung befindet bzw. diese bedeckt. Je nach Anwendung lässt sich daher das Erreichen oder das Unterschreiten eines der jeweiligen Abstrahlvorrichtung zugeordneten Füllstands erkennen.

Abhängig von dem Ort, an dem sich die einzelne Abstrahlvorrichtung im in der Behälterwandung eingebauten Zustand befindet, also abhängig vom Einbauort wird von den Abstrahlvorrichtungen jeweils ein Füllstand überwacht.

Die Füllstände können sich dabei unterscheiden, können im Wesentlichen identisch sein, können sich - in Abhängigkeit von der erzielbaren Messgenauigkeit - überlappen oder können benachbart zueinander sein.

So werden in einer Ausgestaltung Füllstandsbereiche definiert, die durch mehrere Abstrahlvorrichtungen gemeinsam überwacht werden.

Welche Füllstände den einzelnen Abstrahlvorrichtungen zugeordnet sind, ist einerseits bedingt durch die Dimensionierung und Anordnung der Abstrahlvorrichtungen auf dem Trägerelement sowie durch die erreichbare Ortsauflösung der Messungen und ist andererseits bedingt durch die Endposition der Abstrahlvorrichtungen nach der Montage.

Ausgehend davon ist in einer Ausgestaltung vorgesehen, dass die Verarbeitung der Einzelergebnisse oder Einzelmessungen bzw. Einzelfüllstandsüberwachungen der einzelnen Abstrahlvorrichtungen an die konkrete Anwendung bzw. an die sich nach der Montage ergebende Orientierung relativ zum Behälter angepasst wird und nicht vorab fest vorgegeben ist.

Durch die Mehrzahl an Abstrahlvorrichtungen lässt sich zum einen Redundanz erzeugen, indem mindestens zwei Abstrahlvorrichtungen den gleichen Füllstand oder den gleichen Füllstandsbereich überwachen.

Hierfür sind in einer Ausgestaltung mindestens zwei Abstrahlvorrichtungen relativ zu einer Längsachse des Trägerelements auf gleicher Höhe angebracht. Die Längsachse kann dabei beim im Behälter montierten Zustand von einer Längsachse des Behälters abweichen.

Die Redundanz stellt sich bei dieser Ausgestaltung dann ein, wenn die Abstrahlvorrichtungen im befestigten Zustand auf gleicher Höhe im Behälter befindlich sind.

Befinden sie sich auf unterschiedlichen Höhen des Behälters, so sind ihnen jeweils andere Füllstände zugeordnet, deren Erreichen bzw. Unterschreiten sie überwachen.

In einer alternativen oder ergänzenden Ausgestaltung sind mindestens zwei Abstrahlvorrichtungen relativ zu einer Längsachse des Trägerelements auf unterschiedlichen Höhen angebracht. Die Anordnung der Abstrahlvorrichtungen bezieht sich dabei auch hier auf die Fertigung der Vorrichtung und nicht unbedingt auf den im Behälter eingebauten Zustand.

Befinden sich Abstrahlvorrichtungen auf unterschiedlichen Höhen, so können damit unterschiedliche Füllstände erkannt werden bzw. ist es möglich, die Annäherung des Mediums an einen bestimmten Grenzstand zu erkennen. Damit lässt sich insbesondere auch validieren, ob der Grenzstand erreicht worden ist, da - im Fall des Einsatzes als Überfüllschutz - zunächst ein tiefer gelegener Füllstand vom Medium erreicht werden muss.

Je nach Einbauposition können jedoch die Abstrahlvorrichtungen auch einem gleichen Füllstand bzw. einem Füllstandsbereich zugeordnet sein. Dies ist jeweils in Abhängigkeit davon, wie das Trägerelement in die Wandung des Behälters eingebracht worden ist bzw. wie die Endposition des Trägerelements ist.

Die Erfassung von unterschiedlichen Füllständen erlaubt dynamische Messungen bzw. Plausibilitätsüberprüfungen der einzelnen Messsignale. Damit lässt sich entsprechend die Zuverlässigkeit der Füllstandsbestimmung erhöhen.

Durch die einzelnen Abstrahlvorrichtungen ergibt sich dabei in der Vorrichtung zur Füllstandsbestimmung eine Vielzahl von Einzelsensoren, die - zumindest teilweise - jeweils einzeln betrieben werden und daher auch einzelne Messwerte (oder insbesondere Schaltsignale) liefern können.

Die Erfindung bezieht sich daher auch auf eine Messanordnung mit einem Behälter und einer in der Wandung des Behälters befestigten Vorrichtung zur Bestimmung des Füllstands. Dabei lässt sich die hier beschriebene Vorrichtung in diesem Zusammenhang insbesondere auch als Grenzstandschalter bezeichnen.

Die Materialien des Trägerelements sind dabei insbesondere an den Anwendungsfall bzw. an das jeweilige Medium angepasst.

In einer Ausgestaltung werden die Abstrahlvorrichtungen jeweils mit den gleichen Signalen und werden sie in einer weiteren Ausgestaltung mit unterschiedlichen Signalen beaufschlagt.

In einer Ausgestaltung handelt es sich bei mindestens einer Abstrahlvorrichtung um eine Antenne. Die Antenne ist beispielsweise eine miniaturisierte Hornantenne.

In einer weiteren Ausgestaltung handelt es sich bei mindestens einer Abstrahlvorrichtung um eine Patchantenne. Die Patchantenne umfasst eine entsprechende Leiterstruktur, wie sie im Stand der Technik bekannt ist.

In einer Ausgestaltung sind insbesondere alle Abstrahlvorrichtungen im Wesentlichen gleich ausgestaltet. Daher sind in dieser Ausgestaltung die Abstrahlvorrichtungen vorzugsweise entweder Antennen oder insbesondere Patchantennen.

Die Leiterstrukturen bzw. Antennen bestehen dabei in einer Ausgestaltung zumindest teilweise aus einem Metall wie z. B. Kupfer, Silber, Gold oder Nickel.

Indem die Abstrahlvorrichtungen auf einem gemeinsamen Trägerelement bzw. Substrat oder allgemein nah beieinander angeordnet sind, besteht die Gefahr, dass die Antennen miteinander koppeln.

Mögliche Varianten für eine Entkopplung sind beispielsweise die folgenden: In einer Variante werden zwischen den einzelnen Abstrahlvorrichtungen Metallflächen (besondere Ausführungen werden auch als "via fences" oder "picket fences" bezeichnet) angeordnet. Bei einer solchen Trennung ist ein vollständig paralleler Betrieb aller Abstrahlvorrichtungen möglich.

Eine weitere Trennung wird in einer Ausgestaltung realisiert, indem zwischen einer Signalquelle und den einzelnen Abstrahlvorrichtungen unterschiedlich lange Lauflängen für die Signale erzeugt werden. Dadurch gelangt ein von der Signalquelle stammendes Signal zu unterschiedlichen Zeitpunkten an die Abstrahlvorrichtungen.

Ein paralleler Betrieb aller Abstrahlvorrichtungen ist bei einer solchen zeitlichen Trennung nur bedingt möglich. Aufgrund des - im Vergleich zur üblichen Änderung des Füllstands - sehr schnellen Detektionsverfahrens erfolgen die Messungen über die einzelnen Abstrahlvorrichtungen jedoch quasi zeitgleich.

Eine Trennung im Frequenzbereich ist weiterhin oder ergänzend vorgesehen, indem die Abstrahlvorrichtungen mit Signalen unterschiedlicher Frequenz beaufschlagt werden.

Alternativ oder ergänzend unterscheiden sich die Abstrahlvorrichtungen bedingt durch die Geometrie oder die verwendeten Materialien hinsichtlich ihrer Resonanzfrequenzen voneinander, so dass dies bereits eine Entkopplung bedeutet.

Eine weitere Trennung wird in einer Ausgestaltung durch das Codemultiplexverfahren erzielt. Dabei werden die Signale der Signalquelle kodiert, wobei jeder Abstrahlvorrichtung jeweils eine Codesequenz zugeordnet ist.

Vor den Abstrahlvorrichtungen befindet sich daher in einer Ausgestaltung ein Filter, das die Signale entsprechend den Codesequenzen zu der jeweiligen Abstrahlvorrichtung passieren lässt. Gleiches geschieht auch vor den Reflektorschaltungen, so dass nur die jeweils passenden rücklaufenden Signale ausgewertet werden.

In einer Ausgestaltung unterscheidet sich zumindest ein Teil der Abstrahlvorrichtungen von einem anderen Teil zumindest hinsichtlich der räumlichen Polarisation der jeweils abgestrahlten elektromagnetischen Signale. Die einzelnen Abstrahlvorrichtungen weisen also jeweils unterschiedliche Vorzugspolarisationen auf und strahlen Signale mit unterschiedlichen räumlichen Polarisationen ab.

In einer Ausgestaltung haben benachbarte Abstrahlvorrichtungen rechtwinklig aufeinander stehende Polarisationen.

In einer Ausgestaltung sind weitere Strukturen für die Entkopplung vorgesehen, so dass insbesondere auch in Verbindung mit einem räumlichen Abstand ein Teil der Abstrahlvorrichtungen Signale mit der gleichen Polarisation abstrahlt.

In einer Ausgestaltung ist vorgesehen, dass zumindest ein Teil der Abstrahlvorrichtungen im Wesentlichen rotationssymmetrisch relativ zu dem Trägerelement angeordnet ist.

In einer Ausgestaltung ist das Trägerelement auf einer Seite in mehrere Winkelbereiche aufgeteilt, in denen sich jeweils mindestens eine Abstrahlvorrichtung befindet.

Die Winkelbereiche sind dabei in einer Ausgestaltung insbesondere gleich groß.

Ist in dieser Ausgestaltung von insgesamt m Abstrahlvorrichtungen eine Untergruppe von n Abstrahlvorrichtungen jeweils gleichmäßig auf einem - zumindest in diesem Bereich, der die Abstrahlvorrichtungen trägt, kreisförmig ausgestalteten - Trägerelement verteilt, so ist jeder der n Abstrahlvorrichtungen ein Winkelbereich von 360°/n zugeordnet.

In der Mitte des Trägerelements bzw. in der Mitte der rotationssymmetrischen Anordnung der Abstrahlvorrichtungen befindet sich in einer Ausgestaltung mindestens eine weitere Abstrahlvorrichtung, die damit auch den Mittelpunkt der Anordnung der - vorzugsweise rotationssymmetrisch angeordneten - Abstrahlvorrichtungen darstellt.

In einer alternativen Ausgestaltung ist die Mitte frei von Abstrahlvorrichtungen.

In einer zusätzlichen Ausgestaltung ist mehr als eine Abstrahlvorrichtung mittig auf dem Trägerelement angeordnet.

Die Rotationssymmetrie ist insbesondere mit der Ausgestaltung des Trägerelements vorteilhaft, dass das Trägerelement rotatorisch in die Wandung des Behälters eingebracht wird. Daher ist ein beliebiges freies Drehen möglich und es muss nicht unbedingt eine vordefinierte Endstellung erreicht werden.

In einer Ausgestaltung ist das Trägerelement im Wesentlichen kreisscheibenförmig ausgeführt. Die Form erleichtert insbesondere das Einbringen in die Wandung des Behälters.

Dabei sind die Form der Wandung bzw. einer Aussparung in der Wandung und die Außengeometrie des Trägerelements so aufeinander abgestimmt, dass ein Eindrehen - vorzugsweise auch mit dichtender Funktion - möglich ist.

Für das Befestigen des Trägerelements in dem Behälter ist in einer Ausgestaltung vorgesehen, dass das Trägerelement über eine als Außengewinde ausgestaltete Außenfläche verfügt. Die Art des Gewindes ist dabei mit einem Innengewinde einer Aussparung in der Behälterwandung oder ggf. mit einem entsprechend vorzusehenden Adapter abzugleichen.

In einer ergänzenden oder alternativen Ausgestaltung ist das Trägerelement dichtend in die Wandung des Behälters einbringbar.

In einer Ausführung ist das Trägerelement so fest in die Wandung eindrehbar, dass sich eine Dichtfunktion ergibt.

In einer weiteren Variante ist wenigstens eine Dichtlippe vorgesehen und in einer zusätzlichen Variante sind Aussparungen für Dichtelemente, z. B. O-Ringe oder für das Einbringen eines Dichtmaterials vorhanden.

In einer weiteren Ausgestaltung ist ein Adapter vorgesehen, der insbesondere eine Ausrichtung des Trägerelements bzw. der Abstrahlvorrichtungen relativ zum Behälter erlaubt.

In einer Ausgestaltung besteht das Trägerelement zumindest teilweise aus einer Mehrlagenkeramik, wobei zwischen einzelnen Lagen der Mehrlagenkeramik zumindest ein Teil der Abstrahlvorrichtungen angeordnet ist. Die Abstrahlvorrichtungen sind daher durch das Trägerelement vor dem Medium geschützt. Dabei ist das Trägerelement jedoch so ausgestaltet, dass eine Wechselwirkung zwischen den Abstrahlvorrichtungen und dem Medium weiterhin möglich ist.

In einer Ausgestaltung besteht das Trägerelement zumindest teilweise aus einer Keramik und/oder aus einem Kunststoff und/oder aus einem Glas.

Alternativ oder ergänzend besteht das Trägerelement zumindest teilweise aus einem Leiterkartenmaterial oder aus einem HF-Substrat.

In einer Ausgestaltung ist das Trägerelement im Wesentlichen vollständig aus einer der vorgenannten Materialien gefertigt.

In einer Ausgestaltung sind bei einem keramischen Trägerelement die Abstrahlvorrichtungen und auch Zu- bzw. Ableitungen z. B. mit Dünn- oder Dickschichtverfahren erzeugt.

In einer weiteren Ausgestaltung ist das Trägerelement zumindest mit der dem Medium zugewandten Seite plan ausgestaltet.

In einer alternativen Ausgestaltung hat das Trägerelement an der dem Medium zugewandten Seite einen konvexen oder konkaven Verlauf.

Die Außenkontur des Trägerelements trägt insbesondere auch dazu bei, dass das Medium oder ggf. auftretendes Kondensat vom Trägerelement abfließt bzw. abtropft.

In einer Ausgestaltung erlaubt die Vorrichtung die Anwendung in einer explosionsgefährdeten Zone. Hierfür sind insbesondere die Komponenten und vor allem die Abstrahlvorrichtungen entsprechend dimensioniert und ausgestaltet.

In einer Ausgestaltung ist daher insbesondere vorgesehen, dass eine - elektrisch nicht-leitende - dem Medium bzw. dem Prozess zugewandte Oberfläche eine maximale Größe von 4 Quadratzentimeter hat.

Alternativ ist der elektrisch nicht-leitende Teil der dem Medium zugewandten Oberfläche des Trägerelements mit einer metallisch geerdeten Struktur eingefasst, wobei die Projektionsfläche dieser eingefassten Oberfläche kleiner als 16 Quadratzentimeter ist.

Um die Abstrahlvorrichtungen vor dem Medium bzw. vor den in dem Behälter herrschenden Prozessbedingungen zu schützen, ist in einer Ausgestaltung mindestens eine Schutzschicht vorgesehen.

Die Schutzschicht ist dabei vorzugsweise in Richtung Medium bzw. Prozess bzw. Behälterinnenraum vor mindestens einer Abstrahlvorrichtung oder vor der Gesamtheit der Abstrahlvorrichtungen angebracht.

In einer Ausgestaltung ist die Schutzschicht dielektrisch.

In einer Ausgestaltung handelt es sich bei der Schutzschicht um eine Beschichtung.

Die Schutzschicht besteht dabei je nach Ausgestaltung zumindest teilweise aus einem Diamond Like Carbon-Material (DLC-Beschichtung) und/oder aus einem Polytetrafluorethylen (PTFE) und/oder aus einem Glas.

In einer weiteren Ausgestaltung besteht die Schutzschicht aus einem Siliciumoxid (z. B. Siliciummonoxid oder -dioxid).

Um das Anhaften des Mediums zu vermeiden, ist in einer Ausgestaltung vorgesehen, dass die Schutzschicht zumindest teilweise den Lotus-Effekt aufweist.

Weiterhin ist die Schutzschicht in einer Ausgestaltung zumindest teilweise porös und ist in einer alternativen oder ergänzenden Ausgestaltung zumindest teilweise geschlossen.

Daher handelt es sich bei der Erfindung auch um die Anwendung einer Vorrichtung mit einer Signalleiteranordnung zur Erkennung einer Trennschicht bzw. zum Ermitteln von Daten über eine Trennschicht.

Im Einzelnen gibt es nun eine Vielzahl von Möglichkeiten, die Erfindung auszugestalten und weiterzubilden. Dazu wird verwiesen einerseits auf die dem Patentanspruch 1 nachgeordneten Patentansprüche, andererseits auf die folgende Beschreibung von Ausführungsbeispielen in Verbindung mit der Zeichnung. In der Zeichnung zeigen
- Fig. 1: eine schematische Darstellung eines Teils einer Prozessanlage,
- Fig. 2: eine Draufsicht auf einen Teil einer schematisch dargestellten Signalleiteranordnung einer Vorrichtung zur Füllstandsbestimmung in einer ersten Ausführung,
- Fig. 3: eine Draufsicht auf eine Signalleiteranordnung in einer zweiten Ausführung,
- Fig. 4: einen Schnitt durch eine schematische Ausführung einer Signalleiteranordnung in einer dritten Variante,
- Fig. 5: einen schematischen Schnitt durch eine Anwendung einer Vorrichtung zur Füllstandsbestimmung in einer Prozessanlage,
- Fig. 6: eine schematische Darstellung einer ersten Ausführung eines Teils einer Elektronikeinheit,
- Fig. 7: eine schematische Darstellung einer zweiten Ausführung eines Teils einer Elektronikeinheit,
- Fig. 8: eine schematische Darstellung einer dritten Ausführung eines Teils einer Elektronikeinheit,
- Fig. 9: eine schematische Darstellung einer vierten Ausführung eines Teils einer Elektronikeinheit,
- Fig. 10: acht Draufsichten auf unterschiedliche Signalleiteranordnungen,
- Fig. 11: eine schematische Darstellung der Verarbeitung der Abstrahlvorrichtungen einer erfindungsgemäßen Vorrichtung,
- Fig. 12: eine schematische Darstellung der Ermittlung von Daten über eine Trennschicht mithilfe einer erfindungsgemäßen Vorrichtung,
- Fig. 13: ein Ablaufdiagramm für die Inbetriebnahme einer erfindungsgemäßen Vorrichtung,
- Fig. 14: ein schematisches Ablaufdiagramm der Selbstüberwachung einer erfindungsgemäßen Vorrichtung und
- Fig. 15: ein schematisches Ablaufdiagramm in Bezug auf die Auswertung des Verhaltens einer Abstrahlvorrichtung.

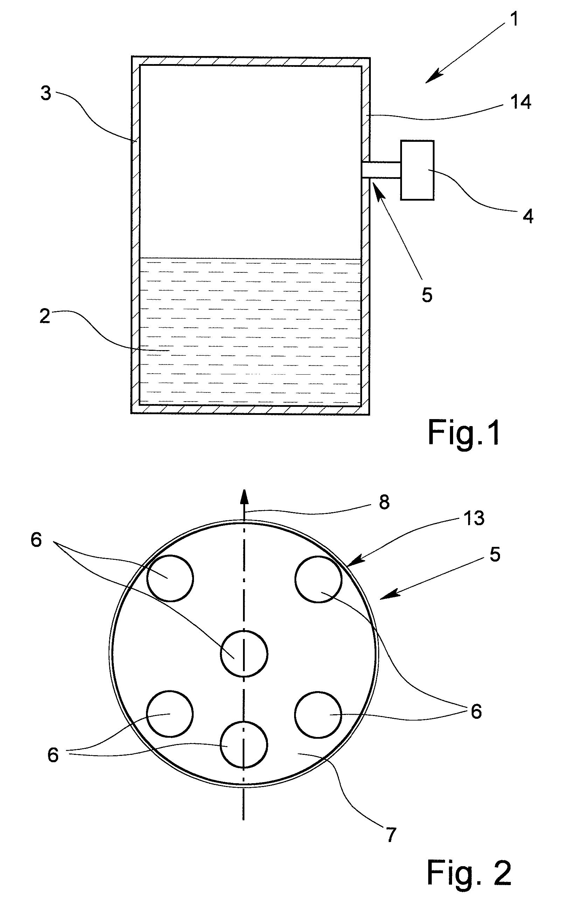

In der Fig. 1 wird schematisch dargestellt, wie in einer Prozessanlage durch eine erfindungsgemäße Vorrichtung 1 der Füllstand des Mediums 2 in einem Behälter 3 überwacht wird.

Die Vorrichtung 1 dient hier insbesondere als Überlaufschutz. Entsprechend lässt sich die Vorrichtung 1 aber auch als Leerlaufschutz - hier nicht dargestellt - verwenden.

Die Vorrichtung 1 verfügt in der dargestellten schematischen Ausführung über eine Elektronikvorrichtung 4 und eine Signalleiteranordnung 5. Die Elektronikvorrichtung 4 erzeugt - vorzugsweise über eine hier nicht dargestellte Signalquelle - elektromagnetische Signale, mit denen die Signalleiteranordnung 5 beaufschlagt wird.

Nach der Beaufschlagung mit den Signalen wertet die Elektronikvorrichtung 4 das Verhalten der Signalleiteranordnung 5 bzw. der im Folgenden zu beschreibenden Einzelkomponenten dahingehend aus, ob das Medium 2 in Kontakt mit der Signalleiteranordnung 5 steht oder nicht.

Beim Überlaufschutz wird dabei die Änderung vom unbedeckten zum bedeckten Zustand erkannt. Umgekehrt wird beim - hier nicht gezeigten - Leerlaufschutz der Fall signalisiert, dass die Signalleiteranordnung 5 frei vom Medium ist.

Ausgenutzt wird bei den Messungen bzw. bei der Überwachung des Füllstands jeweils die Abhängigkeit des Resonanzverhalten - und insbesondere der Resonanzfrequenz - der Signalleiteranordnung 5 bzw. deren Komponenten von der Umgebung der Signalleiteranordnung 5.

Vor allem wird ausgenutzt, dass das Resonanzverhalten davon abhängig ist, ob eine Bedeckung durch ein Medium 2 oder durch Umgebungsluft vorliegt.

Die Signalleiteranordnung 5 ragt in die Wandung 14 des Behälters 3 hinein und ist dadurch ein Teil der Seitenwand. Hierfür verfügt die Wandung 14 über eine Aussparung, die durch die Signalleiteranordnung 5 wieder dichtend verschlossen ist.

Die Fig. 2 zeigt einen Draufblick auf die Signalleiteranordnung 5 und deren insgesamt sechs Abstrahlvorrichtungen 6.

Die Abstrahlvorrichtungen 6 sind in einem gemeinsamen Trägerelement 7 angeordnet. Dabei handelt es sich hier beispielsweise um ein keramisches Substrat, in bzw. auf dem die Abstrahlvorrichtungen 6 erzeugt worden sind. Das Trägerelement 7 ist hier scheibenförmig mit einem Kreisumfang ausgestaltet.

Die Abstrahlvorrichtungen 6 sind in der dargestellten Ausgestaltung kreisförmig ausgestaltet und befinden sich entlang einer Längsachse 8 auf drei unterschiedlichen Höhen.

In alternativen - hier nicht dargestellten - Ausführungen haben nicht alle Abstrahlvorrichtungen die gleiche Form bzw. sind die Abstrahlvorrichtungen z. B. oval oder rechteckig.

Die Abstrahlvorrichtungen 6 sind in der dargestellten Ausführung spiegelsymmetrisch zur Längsachse 8 angeordnet und lassen sich hier in drei Gruppen - gegeben durch drei Ebenen - aufteilen.

Drei Abstrahlvorrichtungen 6 (hier zuunterst dargestellt) sind dabei leicht in der Höhe versetzt zueinander und überwachen - im eingebauten Zustand und unter der Bedingung, dass die Längsachse des Trägerelements und die Längsachse des Behälters im Wesentlichen zusammenfallen - gemeinsam einen breiteren Streifen des Füllstands.

Die zwei äußeren der drei unteren Abstrahlvorrichtungen 6 sind wiederum auf gleicher Höhe befindlich, so dass sich hierfür auch eine Redundanz speziell für die Überwachung des zugeordneten Füllstands innerhalb des Streifens ergibt.

Daran grenzt in der nächsten Ebene eine einzelne Abstrahlvorrichtung 6 - hier mittig angeordnet - an, woran sich zwei Abstrahlvorrichtungen 6 anschließen.

Die zwei oberen Abstrahlvorrichtungen 6 bieten eine Redundanz für den zugeordneten Füllstand, da sich beide auf der gleichen Höhe befinden.

Insgesamt ergeben sich drei unterschiedliche Füllstände bzw. Füllstandsbereiche, die durch die einzelnen Abstrahlvorrichtungen 6 überwacht werden. Durch die Messergebnisse auf den unterschiedlichen Höhen lassen sich Plausibilitätsbetrachtungen anstellen, um die Zuverlässigkeit der Füllstandsbestimmung bzw. -Überwachung zu erhöhen.

Mit der Anzahl der unterschiedlichen Höhen der Abstrahlvorrichtungen erhöht sich - je nach Anwendung bzw. Auswertung - die Auflösung, mit der das Erreichen bzw. das Unterschreiten eines Füllstands detektiert werden kann.

Für das Einbringen des kreisförmigen Trägerelements 7 ist auf der Außenfläche ein Außengewinde 13 vorgesehen. Entsprechend verfügt die Wandung, in der die Vorrichtung zu montieren ist, über ein Innengewinde, so dass das Trägerelement 7 in die Wandung eingedreht werden kann und die Wandung wieder verschließt.

Durch das Drehen als Mittel der Fixierung ergeben sich unterschiedliche Endpositionen der Abstrahlvorrichtungen 6 der Signalleiteranordnung 5.

Um auf diese durch die Montage erzeugte Vielfalt an Orientierungen relativ zum jeweils zu überwachenden Füllstand zu reagieren, wird die Art der Auswertung der Abstrahlvorrichtungen 6 nicht fest vorgegeben, sondern wird die Auswertung bzw. Interpretation der Messergebnisse der einzelnen Abstrahlvorrichtungen 6 jeweils an die Anwendung bzw. an die Endposition angepasst.

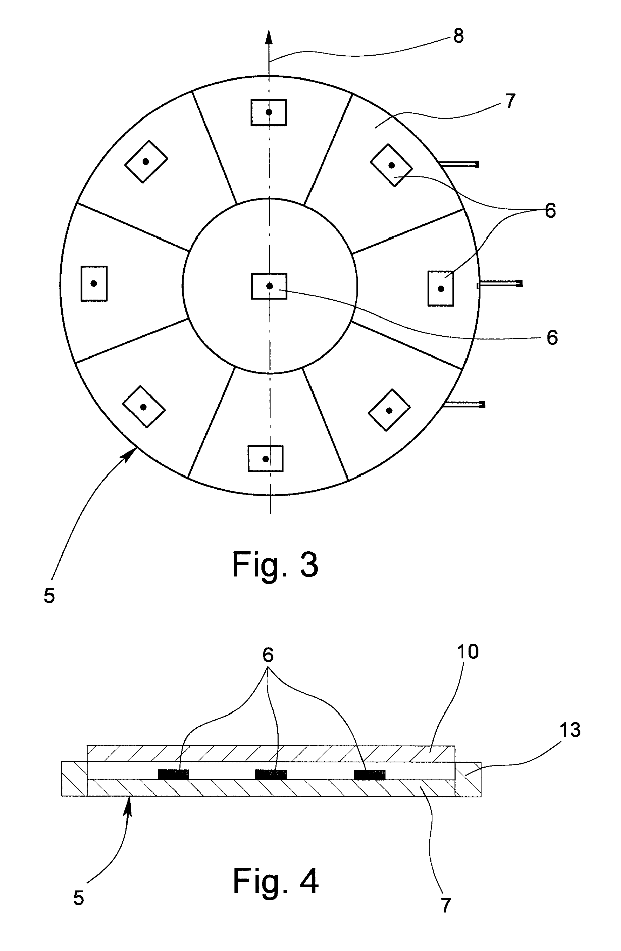

Eine weitere Ausführung der Abstrahlvorrichtungen 6 auf dem Trägerelement 7 zeigt die Fig. 3.

In der dargestellten beispielhaften Ausgestaltung sind acht Abstrahlvorrichtungen 6 rotationssymmetrisch um eine einzelne Abstrahlvorrichtung 6 in der Mitte angeordnet.

Erkennen lässt sich, dass diese Anzahl und Verteilung von Abstrahlvorrichtungen 6 beliebig viele - durch Drehung erzeugte - Endpositionen des Trägerelements 7 erlauben, die jeweils der Überwachung der gleichen bzw. sehr ähnlicher Füllstände dienen.

Dabei lassen sich je nach der Messgenauigkeit, die mit den Abstrahlvorrichtungen 7 realisierbar ist, auch ggf. deutlich mehrere unterschiedliche Höhen - hier entlang der Längsachse 8 des Trägerelements 7 - definieren. Bei einer größeren Streuung oder geringeren Auflösung können auch die Messbereiche zusammenfallen.

Zwischen den Abstrahlvorrichtungen 6 sind jeweils Metallstreifen angedeutet, die eine Entkopplung der einzelnen Abstrahlvorrichtungen 6 bewirken.

Hinter dem Trägerelement 7 sind zusätzlich noch drei Leitungen für die elektronische Anbindung angedeutet.

Eine dritte Variante der Signalleiteranordnung 5 zeigt die Fig. 4.

In dem Schnitt ist zu erkennen, dass es sich bei dem Trägerelement 7 um eine mehrlagige Keramik handelt, zwischen deren Lagen (für die Übersichtlichkeit einmal gestreift und einmal leer dargestellt) die hier drei Abstrahlvorrichtungen 6 eingebracht sind.

Die Abstrahlvorrichtungen 6 sind dabei gegenüber dem - hier nicht dargestellten - Medium durch das Trägerelement 7 selbst und auch durch die Schutzschicht 10 geschützt.

Das Trägerelement 7 ist in der dargestellten Ausgestaltung seitlich von einer Struktur umgeben, die auch das Außengewinde 13 zum Eindrehen und Fixieren in der - hier nicht dargestellten - Aussparung der Wandung des Behälters trägt.

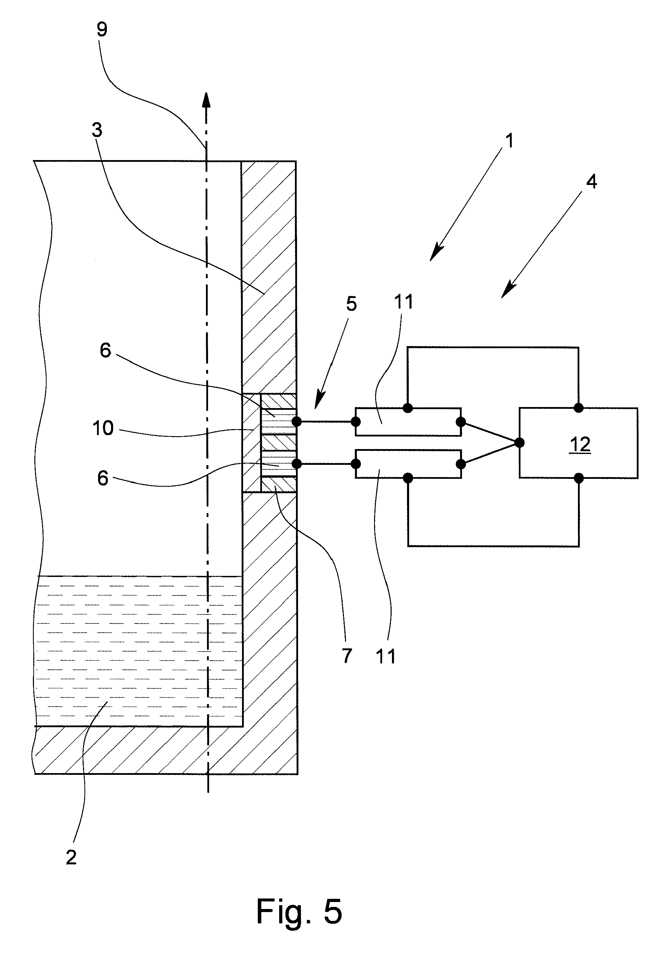

In der Fig. 5 ist zu erkennen, dass zwei Abstrahlvorrichtungen 6 als Teile der Signalleiteranordnung 5 der Vorrichtung 1 innerhalb des Trägerelements 7 auf unterschiedlichen Höhen entlang der Längsachse 9 des Behälters 3 angeordnet sind. Der Behälter 3 verfügt dabei über eine passende Aussparung, die das Trägerelement 7 aufnimmt.

Geschützt sind die Abstrahlvorrichtungen 6 durch eine dem Medium 2 zugewandte dielektrische Schutzschicht 10, die hier frontbündig mit der Innenseite des Behälters 3, die das Medium 2 umfasst, abschließt.

Die Elektronikvorrichtung 4 verfügt über zwei Reflektorschaltungen 11, die jeweils einer Abstrahlvorrichtung 6 zugeordnet sind, und eine Messvorrichtung 12.

Die Messvorrichtung 12 erzeugt elektromagnetische Signale, die über die zwei Reflektorschaltungen 11 auf die Abstrahlvorrichtungen 6 gegeben werden.

Die Reflektorschaltungen 11 erhalten von ihren jeweiligen Abstrahlvorrichtungen 6 ein Reflexionssignal als Antwortsignal, aus dem sich ein Maß für die Resonanzbedingungen der jeweiligen Abstrahlvorrichtung 6 ergibt.

Diese Information der Reflektorschaltungen 11 wird für die weitere Verarbeitung an die Messvorrichtung 12 übermittelt. Die Reflektorschaltungen 11 stellen daher in der gezeigten Ausgestaltung eine Art von Vorverarbeitung dar.

In der Messvorrichtung 12 wird ausgehend von den Daten der Reflektorschaltungen 6 ermittelt, ob das Medium 2 eine der Abstrahlvorrichtungen 6 bedeckt.

Sodann wird ausgehend von den Daten aller Abstrahlvorrichtungen 6 die Zuverlässigkeit der Einzelmessung überprüft.

Schließlich erzeugt die Messvorrichtung 12 wenigstens ein Schaltsignal, das hier das Erreichen des Füllstands darstellt.

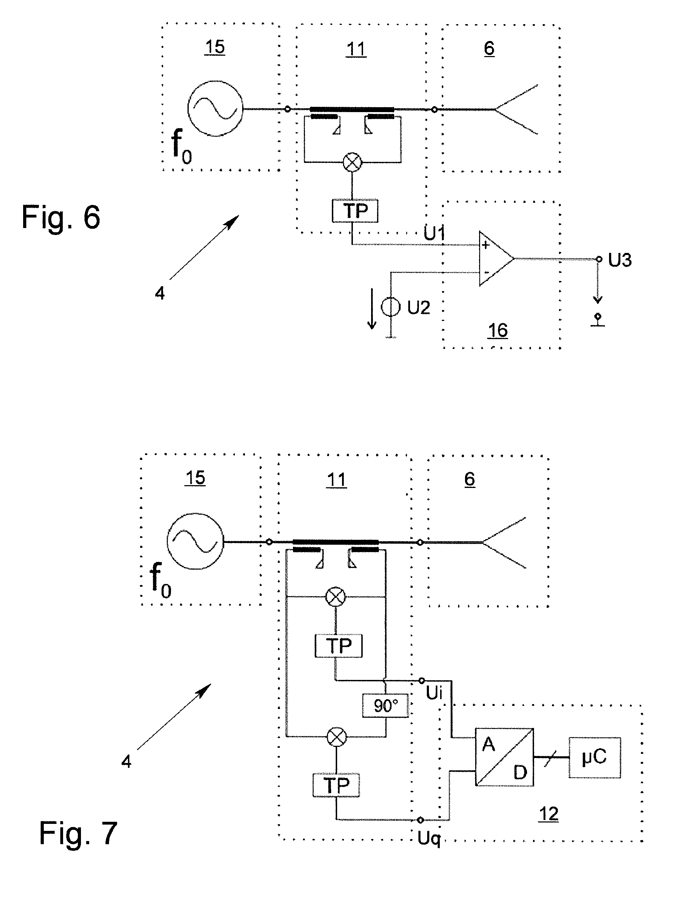

Alternativ oder ergänzend wird das Unterschreiten des Füllstands signalisiert bzw. werden Informationen über den Anstieg bzw. das Abfallen des Füllstands ausgegeben. Dies ist dadurch möglich, dass die Abstrahlvorrichtungen 6 sich auf unterschiedlichen Höhen entlang der Längsachse 9 des Behälters 3 befinden, so dass wenigstens zwei Füllstande überwacht werden können. Beispielhafte Ausgestaltungen von Komponenten der Elektronikvorrichtung 4 für die Umsetzung der Messungen bzw. Überwachung des Füllstands zeigen die folgenden Abbildungen Fig. 6 bis Fig. 9.

Gezeigt ist dabei jeweils nur eine Abstrahlvorrichtung 6, die zudem jeweils als Antenne ausgeführt ist. Die gezeigten Ausgestaltungen sind daher ggf. mit mehreren Abstrahlvorrichtungen 6 zu verbinden bzw. verfügt jede Abstrahlvorrichtung 6 über eine eigene der gezeigten Elektronikschaltungen.

In der Fig. 6 ist beispielhaft eine schmalbandige Skalarmessung realisiert.

Bei der schmalbandigen Skalarmessung wird die Abstrahlvorrichtung 6 kontinuierlich mit einem mono-frequenten Signal gespeist.

Die Speisefrequenz f0, d. h. die Frequenz des elektromagnetischen Signals ist dabei in einer Ausgestaltung derartig gewählt, dass sie der Resonanzfrequenz der Abstrahlvorrichtung 6 in dem Fall entspricht, dass sich vor der Abstrahlvorrichtung 6 nur Luft und insbesondere nicht das zu detektierende Medium befindet.

Wird daher die Abstrahlvorrichtung 6 mit den Signalen beaufschlagt und befindet sich kein Medium vor der Abstrahlvorrichtung 6, so strahlt die Abstrahlvorrichtung 6 die elektromagnetischen Signale ab.

Mit Hilfe der Reflektorschaltung 11 wird die Anpassung der Abstrahlvorrichtung 6 bei der Speisefrequenz f0 dauerhaft überprüft.

Der Signalgenerator 15 versorgt die Abstrahlvorrichtung 6 dauerhaft mit dem Signal der Frequenz f0.

Die Reflektorschaltung 11 gibt eine Gleichspannung U1 aus, die vom Verhältnis zwischen der Leistung der Signale des Signalgenerators 15 und der an der Abstrahlvorrichtung 6 reflektierter Leistung abhängt.

Zudem ist hier in der Reflektorschaltung 11 noch ein Tiefpass vorgesehen.

In einem nachgeschalteten Komparator 16 wird die Gleichspannung U1 mit einer extern angelegten Vergleichsspannung U2 verglichen und damit bewertet.

Befindet sich vor der Abstrahlvorrichtung 6 Luft, so ist die Abstrahlvorrichtung 6 angepasst und ihre Eingangsreflexion ist klein. Die Reflektometerspannung U1 ist in diesem Fall geringer als die Vergleichsspannung U2, so dass der Komparator 16 einen Low-Pegel als Spannung U3 ausgibt.

Befindet sich ein von Luft verschiedenes Medium vor der Abstrahlvorrichtung 6, so verschiebt sich die Resonanzfrequenz der Abstrahlvorrichtung 6 und unterscheidet sich insbesondere von der Frequenz f0 der elektromagnetischen Signale. Die Abstrahlvorrichtung 6 weist daher ein schlechtes Anpassverhalten bei der angelegten Frequenz f0 auf.

Hierdurch ergibt sich eine höhere Eingangsreflexion der Abstrahlvorrichtung 6, so dass auch die Gleichspannung U1 der Reflektorschaltung 11 ansteigt.

Ist die Reflektometerspannung U1 größer als die Vergleichsspannung U2, so erzeugt der Komparator 16, der hier im Wesentlichen aus einem Differenzverstärker besteht, einen High-Pegel, der das Erreichen des mit der Abstrahlvorrichtung 6 verbundenen Füllstands signalisiert.

Das bedeutet, dass die nachgeordnete - hier nicht dargestellte - Auswerteeinheit lediglich die Spannung U3 auswerten bzw. die ggf. auftretende Spannungsänderung erkennen muss, um das Abstrahlverhalten der Abstrahlvorrichtung 6 für die Anwendung als Grenzstandschalter auszuwerten.

Die Fig. 7 zeigt eine Anordnung zur Realisierung einer schmalbandigen Phasormessung.

Diese Ausgestaltung ist insbesondere dann vorteilhaft, wenn die Abstrahlvorrichtung 6 mit einer - hier nicht dargestellten - Schutzschicht überzogen ist oder wenn das zu detektierende Medium eine sehr geringe Permittivität aufweist.

Hierfür wird die in der Fig. 6 dargestellte schmalbandige Skalarmessung um eine weitere Messstelle auf eine komplex-messende Reflektorschaltung - oder einen sogenannten IQ-Reflektometer - erweitert.

Die wesentliche Änderung gegenüber der Ausgestaltung der Fig. 6 hat daher die Reflektorschaltung 11 erfahren.

Für die zweite Messstelle werden sowohl das vom Signalgenerator 15 erzeugte Signal als auch das von der Abstrahlvorrichtung 6 stammende Reflexionssignal aufgeteilt und zu einer zweiten Messstelle geführt.

In einem der beiden Signalpfade befindet sich ein 90°-Phasenschieber.

Die erste, unveränderte Messstelle liefert das "Inphase"-Signal Ui und die zweite, mit dem Phasenschieber verbundene Messstelle das "Quadratur"-Signal Uq.

Beide Signale Ui und Uq werden in der Messvorrichtung 12 digitalisiert und werden in der gezeigten Ausgestaltung in einem Mikroprozessor weiterverarbeitet.

Mit Hilfe der realisierten IQ-Messstelle lässt sich eine Phasenauswertung des reflektierten Signals vornehmen. Vorteilhaft ist dabei, dass der Phasenversatz, der durch die Reflexion am Füllmedium entsteht, ein sehr empfindliches Maß darstellt.

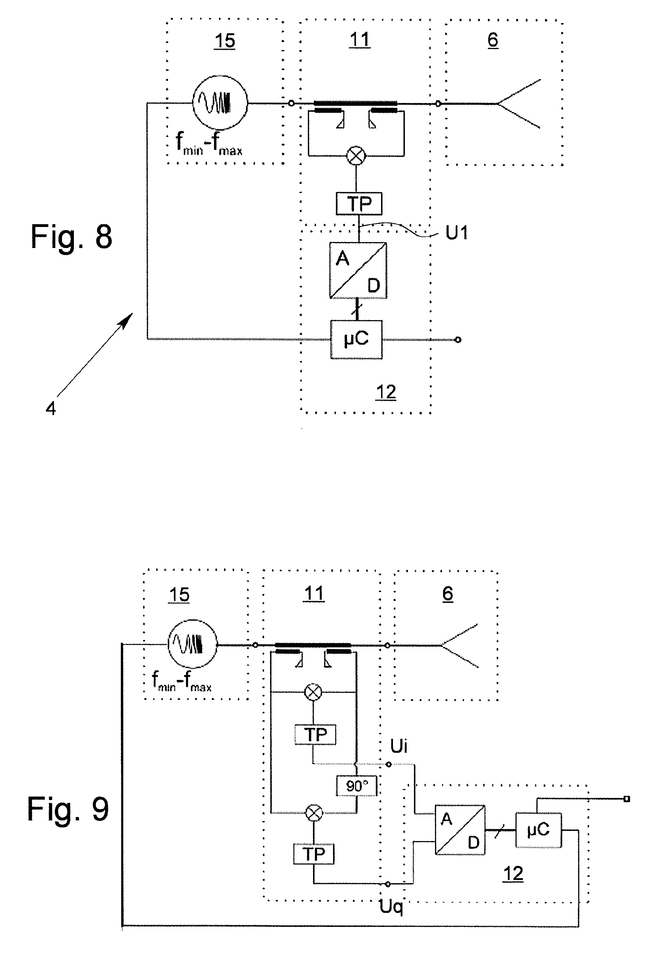

Die Fig. 8 widmet sich einer breitbandigen Skalarmessung.

In dem Fall, dass das zu detektierende Medium hohe Verluste aufweist, verbreitert sich die Anpassungkurve der Abstrahlvorrichtung 6 über der Frequenz.

Dies kann zur Folge haben, dass auch bei einer Bedeckung der Abstrahlvorrichtung 6 durch das Medium keine ausreichende Reflexion detektiert werden kann.

Hierfür wird mit der dargestellten Ausführung eine breitbandige Anpasskurve der Abstrahlvorrichtung 6 aufgezeichnet.

Der Signalgenerator 15 erzeugt hierfür elektromagnetische Signale mit unterschiedlichen Frequenzen zwischen zwei Grenzfrequenzen fmin und fmax.

Dies geschieht beispielsweise durch die Verwendung eines PLL (phase-locked loop, Phasenregelschleife)-gesteuerten VCO (voltage-controlled oscillator, spannungsgesteuerter Oszillator). Alternativ wird eine direkte digitale Synthese (DDS) realisiert.

Die Frequenz der Signale wird in dem gezeigten Beispiel durch einen Mikroprozessor eingestellt, der hier ein Teil der Messvorrichtung 12 ist.

Die Reflektormeterspannung U1 wird in der dargestellten und beispielhaften Ausführung über einen Analog-Digital-Wandler direkt digitalisiert, damit der jeweilige Reflexionswert der eingestellten Frequenz der elektromagnetischen Signale des Signalgenerators 15 zugeordnet werden kann.

Nach einem vollständigen Frequenzsweep wird in der Messvorrichtung 12 die Anpasskurve ausgewertet, wobei die niedrigste Reflektormeterspannung U1 die Resonanzfequenz der Abstrahlvorrichtung 6 bestimmt.

Weicht die ermittelte Resonanzfrequenz von der Frequenz ab, die dem unbedeckten Zustand zugeordnet ist, so wird das Erreichen des der Abstrahlvorrichtung 6 zugeordneten Füllstands signalisiert.

Eine breitbandige Phasormessung lässt sich der Fig. 9 entnehmen.

Die Reflektorschaltung 11 ist unverändert diejenige der Ausführung in der Fig. 6 und erzeugt ebenfalls ein "Inphase"-Signal Ui und ein "Quadratur"-Signal Uq.

Der Signalgenerator 15 ist gleich dem in der Fig. 8 ausgestaltet. Die elektromagnetischen Signale haben daher ebenfalls unterschiedliche Frequenzen, wobei die Steuerung der Frequenz auch hier durch einen Mikroprozessor als Teil der Messvorrichtung 12 erfolgt.

Diese Schaltung ist insbesondere vorteilhaft für den Anwendungsfall, dass sich eine dünne Schutzsicht vor der Abstrahlvorrichtung 6 befindet und insofern durch die Schutzschicht der Einfluss des Mediums auf die Reflexionseigenschaft unter Umständen vermindert ist.

Umso vorteilhafter wird die Schaltung, wenn das Medium zusätzlich stark verlustbehaftet ist. Daher bietet sich insbesondere für diesen Fall die Kombination aus der Phasorauswertung und der Breitbanddetektion an.

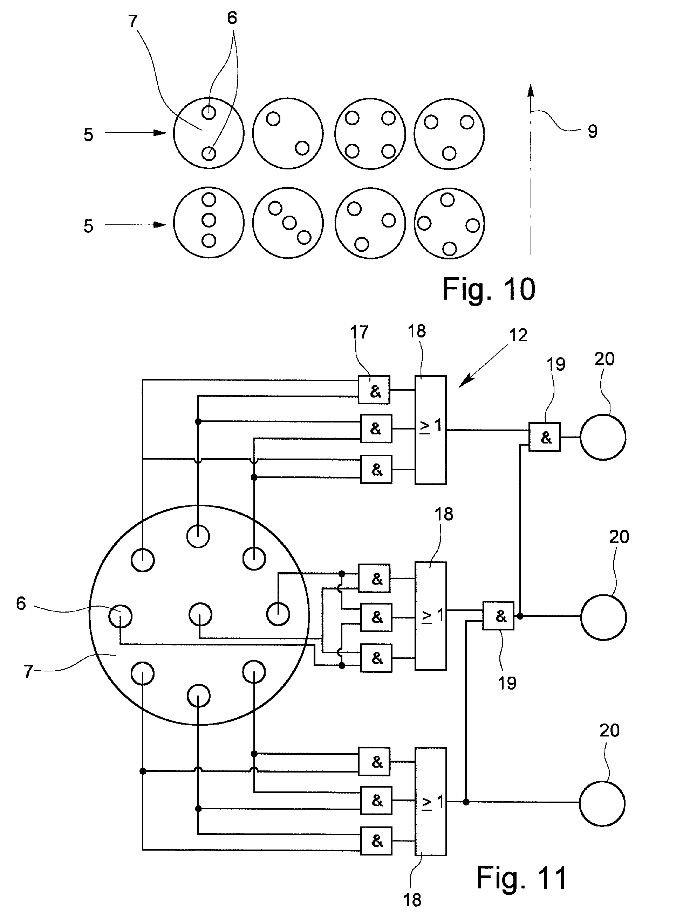

In der Fig. 10 sind acht unterschiedliche Draufsichten auf die dem - hier nicht dargestellten - Medium zugewandte Seite der Signalleiteranordnung 5 von erfindungsgemäßen Vorrichtungen dargestellt.

Die Längsachse 9 des - hier nicht dargestellten - Behälters, in den die Vorrichtungen jeweils eingebracht seien, ist eingezeichnet, so dass zu erkennen ist, dass das Medium von unten nach oben ansteigen würde.

In der oberen der zwei dargestellten Reihen befinden sich diejenigen Ausgestaltungen bzw. Orientierungen relativ zur Längsachse 9, die die Detektion von zwei unterschiedlichen Füllständen erlauben. Die vier Ausgestaltungen der unteren Reihe lassen die Überwachung von drei Füllständen zu.

Zu erkennen ist, dass es sich um vier unterschiedliche Anordnungen der Abstrahlvorrichtungen 6 auf dem Trägerelement 7 handelt, die jeweils in zwei unterschiedlichen Orientierungen relativ zur Längsachse 9 vorliegen. Damit wird deutlich, welche Auswirkungen das rotatorische Montieren der Signalleiteranordnungen 5 hat.

Zusammengehörige Paare befinden sich in der oberen und unteren Reihe jeweils an erster und zweiter Position (ausgehend von der linken Seite). Zudem gehören zusammen die Ausgestaltungen an vorletzter Position in der oberen und letzter Position der unteren Reihe sowie an letzter Position der oberen und vorletzter Position der unteren Reihe.

Offensichtlich ergibt sich durch das Verdrehen des Trägerelements 7 bei der Montage teilweise eine unterschiedliche Messgeometrie relativ zum Behälter bzw. speziell zu dessen Längsachse 9, der entlang das Medium steigt bzw. fällt.

Dieser Effekt wird besonders deutlich bei den Varianten an vorletzter und letzter Stelle: Je nach Drehwinkel lassen sich mit der gleichen Geometrie der Abstrahlvorrichtungen 6 zwei oder drei Füllstände bzw. Ebenen detektieren.

Bei den Orientierungen der Abstrahlvorrichtungen 6 relativ zum Trägerelement 7, bei denen die Abstrahlvorrichtungen 6 jeweils auf einem Durchmesser des kreisförmigen Trägerelements 7 angeordnet sind (Ausgestaltungen an erster und zweiter Stelle der beiden Reihen), lassen sich in Abhängigkeit von der Anzahl der Abstrahlvorrichtungen 6 jeweils entsprechend viele Ebenen bzw. Füllstände detektieren. Hier sind dies zwei bzw. drei Füllstände.

Eine Ausnahme ergibt sich dann, wenn alle Abstrahlvorrichtungen 6 senkrecht zur Längsachse 9 des Behälters angeordnet sind. In diesem - hier nicht dargestellten - Fall lässt sich lediglich ein Füllstand überwachen; dies als Ausgleich jedoch mit einer entsprechend hohen Redundanz.

Die Anordnung der Abstrahlvorrichtungen 6 im Quadrat für vier Abstrahlvorrichtungen 6 bzw. in Form des Großbuchstabens V für drei Abstrahlvorrichtungen 6 erlaubt je nach Drehung die Überwachung von unterschiedlich vielen Füllständen bzw. je nach Drehung die redundante Überwachung eines Füllstands bzw. eines Füllstandsbereichs.

Die Abhängigkeit der möglichen Messebenen bzw. der zu überwachenden Füllstände macht den Vorteil deutlich, der sich dann ergibt, wenn die Art der Auswertung des Abstrahlverhaltens der Abstrahlvorrichtungen 6 nicht fest vorgegeben ist, sondern erst nach der Montage am Einsatzort konfiguriert und daher an die gegebenen Bedingungen angepasst wird.

In der Fig. 11 ist rein schematisch eine Variante dargestellt, wie neun Abstrahlvorrichtungen 6 auf einem Trägerelement 7 durch eine angedeutete Messvorrichtung 12 gemeinschaftlich ausgewertet werden.

Für die Übersichtlichkeit sind dabei alle Elemente und Komponenten fortgelassen, die der eigentlichen Ermittlung des Abstrahlverhaltens der Abstrahlvorrichtungen 6 dienen, so dass hier in der Prinzipskizze die Abstrahlvorrichtungen 6 direkt mit den Komponenten der Messvorrichtung 12 verbunden sind.

Dabei wird im Folgenden der Fall betrachtet, dass die Vorrichtung der Überfüllsicherung dient und dass der Füllstand des Mediums von unten nach oben in der Zeichenebene ansteigt.

Weiterhin erzeugen hier die Abstrahlvorrichtungen 6 jeweils direkt dann ein Signal, wenn sie durch das Medium bedeckt werden.

Acht der neun Abstrahlvorrichtungen 6 sind radial umlaufend auf dem kreisförmigen Trägerelement 7 angeordnet. In der Mitte befindet sich die neunte Abstrahlvorrichtung 6, zu der die anderen Abstrahlvorrichtungen 6 entsprechend rotationssymmetrisch verteilt sind. Insgesamt liegen jeweils drei Abstrahlvorrichtungen 6 auf einem Durchmesser des Trägerelements 7.

Dabei lässt sich auch erkennen, dass die symmetrische Verteilung der Abstrahlvorrichtungen 6 auf dem Trägerelement 7 und deren erhöhte Anzahl - in Relation z. B. zu den Ausgestaltungen der Fig. 10 - eine Vielzahl von unterschiedlichen Einbausituationen, d. h. von unterschiedlichen Endpositionen nach dem Eindrehen zulässt, die im Wesentlichen auf die gleiche Messgeometrie führen.

Unter Messgeometrie sei dabei die Anordnung der Abstrahlvorrichtungen 6 relativ zum Behälter und damit auch relativ zu den möglichen Füllständen des Mediums verstanden.

Die neun Abstrahlvorrichtungen 6 sind in drei Gruppen gruppiert, die sich jeweils auf einen Füllstand bzw. auf einen Füllstandsbereich beziehen.

Die drei mittleren Abstrahlvorrichtungen 6 liegen auf einer Höhe und dienen daher der Überwachung eines Füllstands.

Die drei oberen und drei unteren Abstrahlvorrichtungen 6 sind jeweils leicht in der Höhe zueinander versetzt, wobei sich jeweils die zwei äußeren Abstrahlvorrichtungen 6 auf gleicher Höhe befinden und die mittlere Abstrahlvorrichtung 6 nach unten bzw. nach oben relativ zu ihren Nachbarn versetzt ist.

Indem die jeweils drei Abstrahlvorrichtungen 6 der Gruppen miteinander verbunden bzw. gemeinsam ausgewertet werden, überwachen die drei oberen bzw. drei unteren Abstrahlvorrichtungen 6 jeweils gemeinsam einen Füllstandsbereich, d. h. einen räumlichen Bereich, der durch die Geometrie der einzelnen Abstrahlvorrichtungen 6 und deren relative Verteilung bestimmt ist.

In der dargestellten Ausführung sind jeweils zwei Abstrahlvorrichtungen 6 der Gruppen durch ein logisches Und-Element 17 miteinander verbunden. Das bedeutet, dass dieses Und-Element 17 dann eine logische Eins liefert, wenn beide Abstrahlvorrichtungen 6 jeweils das gleiche Signal erzeugen.

Signalisieren also beide Abstrahlvorrichtungen 6, dass sie durch das Medium bedeckt werden, indem sich dies also aus dem jeweiligen Abstrahlungsverhalten, z. B. aus der Resonanzfrequenz ableiten lässt, so gibt das zugeordnete Und-Element 17 eine Eins aus.

Durch die Und-Elemente 17 wird also überwacht, ob jeweils zwei Abstrahlvorrichtungen 6 das gleiche Signal erzeugen. Dadurch sind die jeweils drei Abstrahlvorrichtungen 6 einer Gruppe im Sinne der Redundanz miteinander verbunden.

Den pro Gruppe drei Und-Elementen 17 ist jeweils ein Oder-Element 18 nachgeordnet, das dann ein Signal erzeugt, wenn wenigstens eines der drei Und-Elemente 17 ein positives Signal ausgibt.

Die Oder-Elemente 18 fassen also die Einzelsignale der Abstrahlvorrichtungen 6 zu jeweils einem Gruppen-Signal zusammen.

Den Oder-Elementen 18 folgen wiederum Und-Elemente 19, die die Gruppensignale der unteren und der mittleren Gruppe bzw. der mittleren und der oberen Gruppe miteinander verbinden, um damit die drei Signaleinheiten 20 anzusteuern, die hier als eine Art von Ampel fungieren.

Im Folgenden sei ein möglicher Ablauf bei der Anwendung als Überlaufschutz betrachtet.

Zu Beginn ist beispielsweise das - hier nicht dargestellte - Medium noch unterhalb aller Abstrahlvorrichtungen 6 befindlich.

Das Medium steigt an und erreicht die unterste Abstrahlvorrichtung 6, die ein entsprechendes Signal erzeugt.

Da es sich jedoch nur um ein Signal für das Erreichen des Füllstandsbereichs innerhalb der unteren Gruppe handelt, so wird noch kein Signal, das die Bedeckung anzeigt, nach außen gegeben. Dies verhindern die entsprechend der Abstrahlvorrichtung 6 zugeordneten zwei Und-Elemente 17.

Steigt das Medium weiter an, so erreicht es auch die beiden äußeren Abstrahlvorrichtungen 6 der unteren Gruppe.

Da somit alle drei Abstrahlvorrichtungen 6 eine Bedeckung signalisieren, ergibt sich für die untere Gruppe das Signal für das Erreichen des Füllstandsbereichs und das untere Oder-Element 18 kann die direkt mit ihr verbundene untere Signaleinheit 20 ansteuern.

Steigt der Füllstand des Mediums weiter, so werden auch die drei Abstrahlvorrichtungen 6 der mittleren Gruppe, die alle auf der gleichen Höhe angeordnet sind, bedeckt. Daher erzeugen alle drei das Signal, dass der Füllstand erreicht worden ist. Die Und-Elemente 17 geben diese Information über das Oder-Element 18 zum anschließenden Und-Element 19 weiter.

Das Signal der mittleren Gruppe und das Signal der unteren Gruppe sind über ein Und-Element 19 miteinander verbunden.

Hiermit wird das Ergebnis der mittleren Gruppe in Bezug auf Plausibilität überprüft.

Die mittlere Signaleinheit 20 kann also nur dann das Erreichen des mittleren Füllstands anzeigen, wenn auch der untere Füllstand erreicht bzw. daran anschließend überschritten worden ist.

Nimmt der Füllstand weiter zu, so erreicht das Medium die beiden äußeren Abstrahlvorrichtungen 6 der oberen Gruppe, die durch das untere Und-Element 17 der drei oberen Und-Elemente 17 miteinander verbunden sind. Daher erzeugt bereits bei diesem Füllstand die obere Gruppe ein Signal, das in Verbindung mit dem Signal der mittleren Gruppe auch die obere Signaleinheit 20 ansteuern kann.

Befindet sich daher das Medium im Füllstandsbereich der oberen Gruppe, so leuchten alle drei Signaleinheiten 20.

Die hier dargestellten Komponenten der Messvorrichtung 12 zur Verarbeitung der Einzelergebnisse bezüglich des Abstrahlverhaltens der Abstrahlvorrichtungen 6 sind beispielhaft als Logik-Bauteile ausgeführt.

Die Umsetzung erfolgt dabei in einer alternativen Ausgestaltung in Form mindestens eines Mikroprozessors und in einer zusätzlichen Ausgestaltung in Form von mindestens einem FPGA (Field Programmable Gate Array).

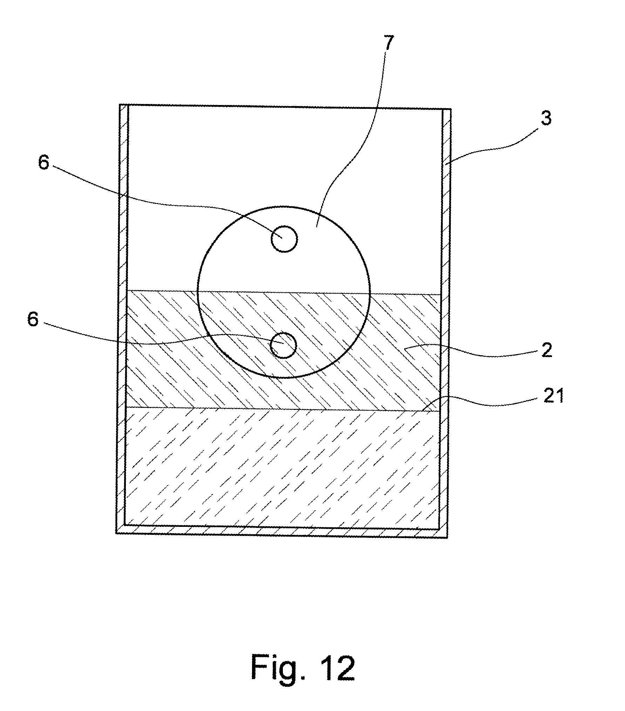

In der Fig. 12 ist dargestellt, wie durch die erfindungsgemäße Vorrichtung auch die Lage einer Trennschicht 21 erkannt und ermittelt werden kann.

Trennschichten ergeben sich, wenn sich das Medium aus zwei sich nicht mischenden Substanzen oder Phasen zusammensetzt. Zu denken ist beispielsweise an ein Medium, das aus Wasser und Öl besteht.

Dargestellt ist rein schematisch einer Seite eines Behälters 3, in dessen - hier hinterer - Wandung sich ein Trägerelement 7 mit zwei Abstrahlvorrichtungen 6 befindet.

Dargestellt ist zudem vor der Behälterwandung das Medium 2, das aus Substanzen besteht, zwischen denen sich die Trennschicht 21 befindet.

In der gezeigten Situation bedeckt die obere Substanz bereits die untere Abstrahlvorrichtung 6 und nähert sich der oberen Abstrahlvorrichtung 6.

Steigt das Medium 2 noch weiter an, so wird die untere Abstrahlvorrichtung 6 zu einem gewissen Zeitpunkt nicht mehr von der oberen, sondern von der unteren Substanz bedeckt sein.

Unterscheiden sich die beiden Substanzen des Mediums 2 hinsichtlich ihrer Permittivität, so führt der Wechsel bei der Bedeckung bei der unteren Abstrahlvorrichtung 6 zu einer Änderung des Abstrahlverhaltens, insbesondere zu einer Änderung der Resonanzfrequenz.

Zu einem weiteren Zeitpunkt erreicht die obere Substanz die obere Abstrahlvorrichtung 6, die dann nicht mehr frei und unbedeckt, sondern bedeckt ist, so dass sich auch deren Abstrahlverhalten ändert.

Für die Ermittlung von Daten über die Trennschicht 21 werden noch zwei Zeitdauern benötigt:
Dies ist eine erste Zeitdauer, die zwischen den Zeitpunkten liegt, an denen die Abstrahlvorrichtungen 6 jeweils den Übergang vom unbedeckten, d. h. freien Zustand zum bedeckten Zustand signalisieren. Dies sind also die Zeitpunkte, zu denen die Abstrahlvorrichtungen 6 jeweils von der oberen Substanz erreicht werden.
Die erste Zeitdauer in Verbindung mit dem Wissen über die Höhendifferenz zwischen den zwei Abstrahlvorrichtungen 6 erlaubt die Ermittlung der Ansteigs- oder Füllgeschwindigkeit des Mediums 2.

Damit lässt sich also ermittelt, wie schnell das Medium 2 ansteigt.

Dabei wird davon ausgegangen, dass der Füllstand des Mediums 2 gleichmäßig ansteigt und dass z. B. keine Pause stattfindet oder der Füllstand zwischenzeitig abnimmt.

Weiterhin ist eine zweite Zeitdauer erforderlich, die zwischen den Zeitpunkten liegt, zu denen von einer Abstrahlvorrichtung die erste Bedeckung durch das Medium an sich bzw. der Wechsel der Substanzen festgestellt werden.

Diese zweite Zeitdauer ist ein Maß dafür, wie schnell die obere Substanz der zwei Substanzen über die zugehörige Abstrahlvorrichtung hinweggezogen ist.

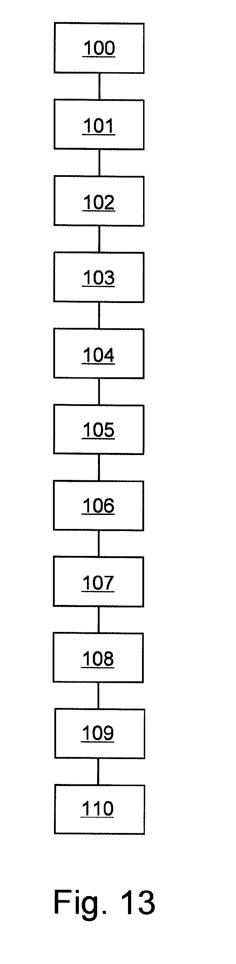

In der Fig. 13 sind Schritte zur Inbetriebnahme einer erfindungsgemäßen Vorrichtung und insbesondere zur freien Konfigurierung der Auswertung dargestellt.

Die - hier nicht dargestellte - Vorrichtung verfügt dabei beispielhaft über fünf Abstrahlvorrichtungen, deren Orientierung relativ zur Längsachse des Behälters in Folge der rotatorischen Montage nicht bekannt ist und auch nur umständlich zu ermitteln wäre, da sich die Abstrahlvorrichtung in Richtung Behälterinnenraum befinden.

Im Schritt 100 wird die Vorrichtung am Messort montiert, indem das Trägerelement in eine Aussparung der Behälterwandung eingedreht wird.

In Abhängigkeit von der erzielten Endposition sind die Abstrahlvorrichtungen unterschiedlich zum Behälter bzw. insbesondere zu dessen Längssachse angeordnet und beziehen sich daher auch in nicht vorhersehbarer Weise auf unterschiedliche oder gleiche Füllstände.

Im Schritt 101 wird der normale Messbetrieb aufgenommen, ohne dass ein zu überwachender Füllstand mit Absicht und nur für die Kalibrierung angefahren wird.

Im Schritt 102 erreicht das Medium das erste Mal - hier beispielhaft nur - eine Abstrahlvorrichtung der erfindungsgemäßen Vorrichtung und bedeckt diese, so dass sich das Abstrahlverhalten dieser Abstrahlvorrichtung erkennbar ändert.

Diese Abstrahlvorrichtung wird daher im Schritt 103 dem niedrigsten Füllstand zugeordnet.

Im Schritt 104 erreicht das Medium zwei andere Abstrahlvorrichtungen, die beide entsprechend signalisieren, dass eine Bedeckung gegeben ist.

Im Schritt 105 wird überprüft, ob die untere Abstrahlvorrichtung weiterhin Bedeckung anzeigt.

Im Schritt 106 wird die Information von der untersten Abstrahlvorrichtung mit den Signalen der zwei höher gelegenen Abstrahlvorichtungen dahingehend kombiniert, dass die beiden Abstrahlvorrichtungen einem gemeinsamen Füllstand zugeordnet werden und dass beide im Sinne der Redundanz miteinander gekoppelt werden. Weiterhin wird auch die Zuordnung zwischen den Abstrahlvorrichtungen und dem Füllstand vorgenommen.

Im Schritt 107 steigt der Füllstand weiter und erreicht zwei zusätzliche Abstrahlvorrichtungen.

Im Schritt 108 wird aus den Zeitpunkten, zu denen die beiden letztgenannten Abstrahlvorrichtungen den Kontakt mit dem Medium signalisieren, geschlussfolgert, dass zwischen beiden ein leichter Höhenversatz besteht, da eine Zeitdifferenz zwischen den Signalen liegt.

Im Schritt 109 werden die beiden Abstrahlvorrichtungen trotz des Versatzes zu einer Gruppe und dadurch auch zu einem Füllstandsbereich und nicht zu einem schmäleren Füllstand zugeordnet.

Im Schritt 110 werden noch einmal die Signale von allen Abstrahlvorrichtungen miteinander verglichen und die Kalibrierung wird abgeschlossen, nachdem noch jeweils die von den einzelnen Abstrahlvorrichtungen ermittelten Resonanzfrequenzen im Fall der Bedeckung ermittelt und weggeschrieben worden sind.

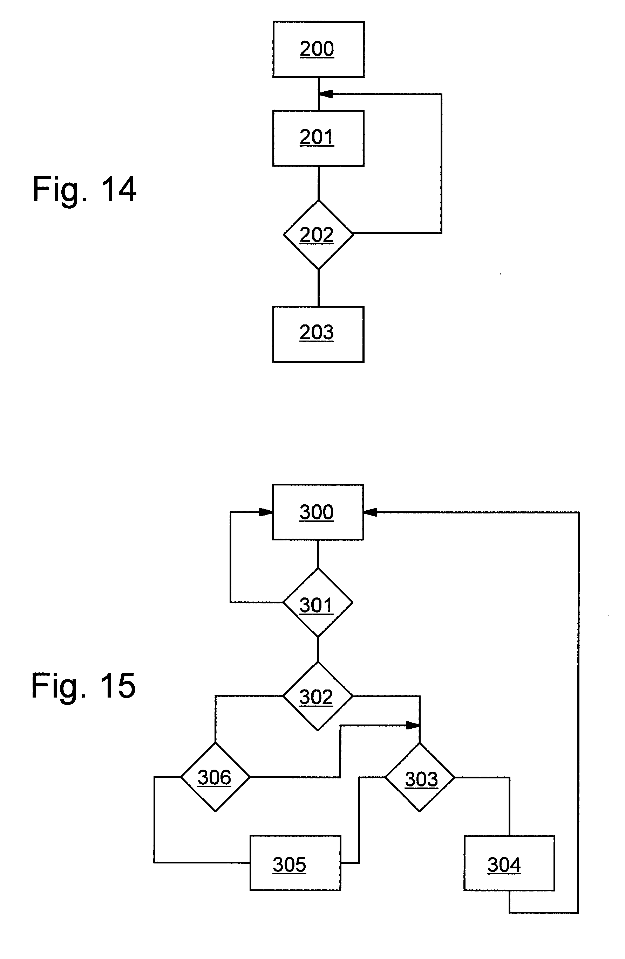

Die Fig. 14 zeigt einige Schritte zum Erkennen einer Verschmutzung von - hier nicht dargestellten - Abstrahlvorrichtungen.

Im Schritt 200 wird die Resonanzfrequenz im bedeckten Zustand einer Abstrahlvorrichtung vermessen.

Im Schritt 201 erfolgt für die Selbstüberwachung nach einer vorgegebenen Zeitdauer eine erneute Vermessung der Resonanzfrequenz der Abstrahlvorrichtung, wofür sichergestellt sein muss, dass auch der bedeckte Zustand gegeben ist. Hierfür werden beispielweise die Messsignale der übrigen Abstrahlvorrichtungen herangezogen.

Im Schritt 202 wird der aktuelle Frequenzwert mit dem abgespeicherten Wert verglichen.

Liegen die Werte innerhalb eines Toleranzbereichs, so erfolgt ein Rücksprung auf den Schritt 201 und zu gegebener Zeit wird die Frequenzmessung wiederholt.

Ergibt sich jedoch eine Abweichung über den Toleranzbereich hinaus, so wird im Schritt 203 angezeigt, dass die Abstrahlvorrichtung nicht mehr in einem korrekten Zustand, sondern insbesondere verschmutzt ist.

Die Fig. 15 zeigt einen generellen Ablauf für die Verarbeitung des Abstrahlverhaltens einer Abstrahlvorrichtung.

Im Schritt 300 wird ein Maß für das Abstrahlverhalten der Abstrahlvorrichtung ermittelt. Dies ist beispielsweise die Resonanzfrequenz.

Im Schritt 301 wird dieses Maß mit einem hinterlegten Wert verglichen und es wird ermittelt, ob eine Änderung vorliegt.

Liegt keine Änderung vor, so wird zum Schritt 300 zurückgekehrt.

Im Fall einer Änderung wird im Schritt 302 überprüft, ob die ausgewählte Abstrahlvorrichtung mit weiteren Abstrahlvorrichtungen im Sinne der Redundanz gemeinsam zu betrachten ist.

Ist dies nicht der Fall, so wird im Schritt 303 eine Plausibilitätsbetrachtung vorgenommen.

Es wird beispielsweise überprüft, ob das Ergebnis, das sich aus der Änderung des Abstrahlverhaltens der ausgesuchten Abstrahlvorrichtung ergibt, in Übereinstimmung mit den Aussagen der anderen Abstrahlvorrichtungen steht. Ergibt sich z. B. der Wechsel von "Unbedeckt" zu "Bedeckt", so müssen auch die Abstrahlvorrichtungen eine Bedeckung melden, die tieferen Füllständen zugeordnet sind.

Ist der Plausibilität Genüge getan, so wird im Schritt 304 signalisiert, dass der mit der Abstrahlvorrichtung verbundene Füllstand vom Medium erreicht worden ist.

Zeigen sich jedoch Widersprüche, so erfolgt im Schritt 305 eine Fehlermeldung.

Zeigt sich im Schritt 302, dass es weitere Abstrahlvorrichtungen gibt, die dem gleichen Füllstand oder dem gleichen Füllstandsbereich zugeordnet sind, so wird im Schritt 306 ein entsprechender Abgleich vorgenommen.

Zeigt die Redundanzbetrachtung im Schritt 306, dass der durch die Änderung des Abstrahlverhaltens der Abstrahlvorrichtung signalisierte Zustand in Übereinstimmung mit den anderen durch Redundanz miteinander verbundenen Abstrahlvorrichtungen ist, so wird im Schritt 303 die Plausibilitätsbetrachtung vorgenommen.

Zeigen sich jedoch Unterschiede, so wird in der dargestellten Ausgestaltung ebenfalls im Schritt 305 eine Fehlermeldung erzeugt.

Dem Schritt 304 schließt sich schließlich wieder Schritt 300 an.

## Patentansprüche

1. Verfahren zur Bestimmung des Füllstands eines Mediums (2) in einem Behälter (3),
**dadurch gekennzeichnet,**
**dass** mehrere Abstrahlvorrichtungen (6) mit elektromagnetischen Signalen beaufschlagt werden und dass ein Abstrahlverhalten mindestens eines Teils der Abstrahlvorrichtungen (6) in Hinblick auf den Füllstand des Mediums (2) ausgewertet wird.

2. Verfahren nach Anspruch 1, **dadurch gekennzeichnet, dass** bei der Auswertung des Abstrahlverhaltens mindestens ein Maß für die Impedanzanpassung ermittelt wird.

3. Verfahren nach Anspruch 2, **dadurch gekennzeichnet, dass** ein zeitliches Verhalten des Maßes für die Impedanzanpassung ermittelt und ausgewertet wird.

4. Verfahren nach Anspruch 2 oder 3, **dadurch gekennzeichnet, dass** aus dem Abstrahlverhalten von mindestens zwei Abstrahlvorrichtungen (6) eine Annäherung des Mediums (2) an einen vorgebbaren Füllstand ermittelt wird, indem für die mindestens zwei Abstrahlvorrichtungen (6) jeweils das Maß für die Impedanzanpassung ermittelt wird und indem die ermittelten Maße in Abhängigkeit vom Zeitpunkt einer jeweiligen Änderung ausgewertet werden.

5. Verfahren nach einem der Ansprüche 1 bis 4, **dadurch gekennzeichnet, dass** das Abstrahlverhalten von mindestens zwei Abstrahlvorrichtungen (6) im Sinne der Redundanz ausgewertet wird, indem das Abstrahlverhalten der mindestens zwei Abstrahlvorrichtungen (6) in Hinblick auf einen gemeinsamen Füllstand und/oder gemeinsamen Füllstandsbereich ausgewertet wird.

6. Verfahren nach einem der Ansprüche 1 bis 5, **dadurch gekennzeichnet, dass** frei konfiguriert wird, von welchen Abstrahlvorrichtungen (6) das Abstrahlverhalten zusammen oder getrennt ausgewertet wird.

7. Verfahren nach einem der Ansprüche 1 bis 6, **dadurch gekennzeichnet, dass** eine Kalibrierung vorgenommen wird, indem eine zeitliche Abfolge einer Änderung des Abstrahlverhaltens von einzelnen Abstrahlvorrichtungen (6) ermittelt wird.

8. Verfahren nach einem der Ansprüche 1 bis 7, **dadurch gekennzeichnet, dass** für die Auswertung des Abstrahlverhaltens wenigstens eines Teils der Abstrahlvorrichtungen (6) das Abstrahlverhalten in einem Lernmodus eingelernt wird, wobei im Lernmodus zumindest für den Teil der Abstrahlvorrichtungen (6) das jeweilige Abstrahlverhalten separat ausgewertet wird und wobei ausgehend von dem Abstrahlverhalten mindestens einer ausgewählten Abstrahlvorrichtung (6) eine Bewertung des Abstrahlverhalten der anderen Abstrahlvorrichtungen (6) vorgenommen wird.

9. Verfahren nach einem der Ansprüche 1 bis 8, **dadurch gekennzeichnet, dass** die Abstrahlvorrichtungen (6) derartig relativ zum Behälter (3) befestigt werden, dass mindestens zwei Abstrahlvorrichtungen (6) jeweils ein anderer Füllstand des Mediums (2) zugeordnet ist, wobei das Medium (2) beim Erreichen des jeweiligen Füllstands eine Änderung des Abstrahlverhaltens der dem Füllstand zugeordneten Abstrahlvorrichtung (6) bewirkt.

10. Verfahren nach einem der Ansprüche 1 bis 9, **dadurch gekennzeichnet, dass** die Abstrahlvorrichtungen (6) derartig relativ zum Behälter (3) befestigt werden, dass mindestens zwei Abstrahlvorrichtungen (6) jeweils im Wesentlichen ein gleicher Füllstand oder ein gleicher Füllstandsbereich des Mediums (2) zugeordnet ist, wobei das Medium (2) beim Erreichen des Füllstands bzw. des Füllstandsbereichs eine Änderung des Abstrahlverhaltens der mindestens zwei dem Füllstand bzw. dem Füllstandsbereich zugeordneten Abstrahlvorrichtungen (6) bewirkt.

11. Verfahren nach einem der Ansprüche 1 bis 10, **dadurch gekennzeichnet, dass** aus einer zeitlichen Änderung des Abstrahlverhaltens von mindestens einer Abstrahlvorrichtung (6) eine Aussage über einen Zustand - insbesondere einen Grad der Verschmutzung oder der Alterung - der Abstrahlvorrichtung (6) ermittelt wird und dass die Aussage bei der Bestimmung des Füllstands des Mediums (2) verwendet wird.

12. Verfahren nach einem der Ansprüche 1 bis 11, **dadurch gekennzeichnet, dass** das Abstrahlverhalten mindestens einer Abstrahlvorrichtung (6) in Hinblick auf mindestens eine Eigenschaft des Mediums (2) ausgewertet wird.

13. Verfahren nach Anspruch 12, **dadurch gekennzeichnet, dass** ausgehend von einer Resonanzfrequenz mindestens einer Abstrahlvorrichtung (6) eine Aussage über eine Permittivität des Mediums (2) ermittelt wird.

14. Verfahren nach Anspruch 12 oder 13, **dadurch gekennzeichnet, dass** in dem Fall von unterschiedlichen Resonanzfrequenzen unterschiedlicher Abstrahlvorrichtungen (6) eine Aussage über das Vorliegen einer Trennschicht (21) im Medium (2) gewonnen wird.

15. Verfahren nach Anspruch 14, **dadurch gekennzeichnet, dass** eine Höhe einer Trennschicht (21) ermittelt wird, indem ausgehend vom Abstrahlverhalten von mindestens zwei, jeweils unterschiedlichen Füllständen zugeordneten Abstrahlvorrichtungen (6) das Erreichen des jeweiligen Füllstands durch das Medium (2) ermittelt, eine erste Zeitdauer zwischen dem Erreichen des jeweiligen Füllstands ermittelt, aus der ersten Zeitdauer und aus einem bekannten Füllstandsabstand zwischen den den zwei Abstrahlvorrichtungen (6) zugeordneten Füllständen eine Füllgeschwindigkeit ermittelt und für eine der zwei Abstrahlvorrichtungen (6) eine zweite Zeitdauer zwischen dem Erreichen des der Abstrahlvorrichtung (6) zugeordneten Füllstands und einer Änderung der Resonanzfrequenz der Abstrahlvorrichtung (6) ermittelt wird.
